(19) Europäisches Patentamt
European Patent Office
Office européen des brevets

(11) EP 1 189 243 B1

(12) **EUROPEAN PATENT SPECIFICATION**

(45) Date of publication and mention of the grant of the patent:
**22.11.2006 Bulletin 2006/47**

(51) Int Cl.:
***H01B 1/12*** *(2006.01)*
***H01M 4/62*** *(2006.01)*
***H01M 2/16*** *(2006.01)*
***H01M 10/40*** *(2006.01)*
***H01G 9/00*** *(2006.01)*

(21) Application number: **01307966.0**

(22) Date of filing: **19.09.2001**

(54) **Ion-conductive composition, gel electrolyte, non-aqueous electrolyte battery, and electrical double-layer capacitor**

Ionenleitende Zusammensetzung, gelierter Elektrolyt, Batterie mit nichtwässrigem Elektrolyt, und elektrischer Doppelschichtkondensator

Composition à conduction ionique, électrolyte gélifié, batterie à électrolyte nonaqueux, et condensateur électrique à double couche

(84) Designated Contracting States:
**AT BE CH CY DE DK ES FI FR GB GR IE IT LI LU MC NL PT SE TR**

(30) Priority:
**19.09.2000 JP 2000282968**
**27.11.2000 JP 2000359192**
**20.04.2001 JP 2001122164**
**23.08.2001 JP 2001252268**

(43) Date of publication of application:
**20.03.2002 Bulletin 2002/12**

(73) Proprietor: **Nisshinbo Industries, Inc.**
**Chuo-ku,**
**Tokyo (JP)**

(72) Inventors:
- **Maruo, Tatsuya,**
  **c/o Nisshinbo Industries, Inc.**
  **Chiba-shi,**
  **Chiba-ken (JP)**
- **Yoshida, Hiroshi**
  **c/o Nisshinbo Industries, Inc.**
  **Chiba-shi,**
  **Chiba-ken (JP)**
- **Sato, Takaya,**
  **c/o Nisshinbo Industries, Inc.**
  **Chiba-shi,**
  **Chiba-ken (JP)**

(74) Representative: **Stuart, Ian Alexander et al**
**Mewburn Ellis LLP**
**York House**
**23 Kingsway**
**London WC2B 6HP (GB)**

(56) References cited:
**EP-A- 0 524 718**
**WO-A-00/57439**
**DE-A- 19 713 072**
**DE-A- 19 855 889**
**US-A- 5 558 959**
**US-A- 5 665 265**
**US-A- 5 912 093**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

## Description

The present invention relates to gel electrolytes, e.g. for use in non-aqueous electrolyte batteries and electrical double-layer capacitors.

Binder polymers for electrodes used in lithium ion secondary cells and electrical double-layer capacitors must have, among other properties, the ability to bond with active materials, strong adhesion to metal foil current collectors, and a good strength. Properties required of ion-conductive compositions include a high ionic conductivity, electrochemical stability to non-aqueous electrolyte solutions, resistance to electrolyte solutions and, when they are to be coated onto a current collector to form an electrode film, ready solubility in a suitable solvent.

The ionic conductivity of such ion-conductive compositions has a large impact on the internal resistance of the cell. In lithium ion secondary cells in particular, the lowest possible internal resistance is desired to improve the discharge characteristics and reduce loss at a large current.

However, it is no easy task to impart all of the above required properties. For lack of a better alternative, use has generally been made of fluoropolymers such as polyvinylidene fluoride (PVDF) resins (see, for example, JP-A 4-249860).

Such fluoropolymers, including polyvinylidene fluoride resins, have an excellent resistance to polar solvents, yet they have a poor ionic conductivity, poor ability to bond with active materials, and poor adhesion to the surface of metal current collectors. One reason for the poor ionic conductivity of polyvinylidene fluoride resin is its low swelling ratio in electrolyte solutions.

Reaction-curable binders which contain prepolymers, oligomers and monomers of compounds bearing urethane linkages, urea linkages, epoxy groups, amide groups or imide groups, acrylic compounds, (meth)acryloyl compounds, allyl compounds and vinyl compounds that react under heating or exposure to a suitable form of radiation (e.g., ultraviolet light, electron beams, gamma rays) have been described in JP-A 10-21927 and JP-A 10-255806. When such reaction-curable binders are used, the swelling ratio in electrolyte solutions can be increased and the ionic conductivity enhanced by the introduction of structures such as polyoxyethylene chains.

Electrode plate production methods that use such reaction-curable binders involve coating a metal foil current collector with a composition containing as the essential constituents an active substance and a reaction-curable binder, then reacting and thereby curing the binder within the composition coated onto the current collector by heating or exposure to suitable radiation such as UV light, electron beams or gamma rays so as to form a cured layer of the active material. However, because the curing reaction is non-uniform, depending on the reaction conditions, the active material layer may crack, the reaction may stop with the binder still in a low-molecular-weight state, and the bonding properties may decline. Also, the reaction takes too much time, in addition to which substances such as reaction catalyst, reaction initiator, unreacted prepolymer, oligomer and monomer tend to remain behind in the active material layer.

Preferred embodiments of the present invention may enable one to provide gel electrolytes highly suitable for use as separators. They may be used in high-performance non-aqueous electrolyte batteries and electrical double-layer capacitors which have been built using an electrode binder composition in which a resin constituent bonds well with active materials or activated carbon and which has excellent adhesion to current collectors.

We have found that by controlling within a suitable range of 150 to 800% the swelling ratio in an electrolyte solution of a thermoplastic resin used in electrode binder compositions and ion-conductive compositions for non-aqueous electrolyte batteries and electrical double-layer capacitors, there can be obtained separators which have a high ionic conductivity and thus lower the internal resistance of the cell, and electrodes in which the resin constituent bonds well with active materials or activated carbon and which has excellent adhesion to the current collector. These components can be assembled to produce high-performance non-aqueous electrolyte batteries and electrical double-layer capacitors which undergo no loss of binder composition from the electrodes, separation of the active material (or activated carbon) layer from the current collector or cracking in assembly operations and during repeated charging and discharging, and which have outstanding discharge load characteristics.

In a first aspect, the invention provides a gel electrolyte comprising an electrolyte solution composed of an ion-conductive salt and a solvent, defined below, in which the ion-conductive salt is soluble, in combination with a thermoplastic polyurethane resin having a swelling ratio, as determined from the equation

$$\text{swelling ratio (\%)} = \frac{\text{weight in grams of swollen thermoplastic resin after 24 hours immersion in electrolyte solution at 20°C (g)}}{\text{weight in grams of thermoplastic resin before immersion in electrolyte solution at 20°C (g)}} \times 100 ,$$

within a range of 150 to 800%.

The thermoplastic polyurethane resin preferably contains units of general formula (1) below

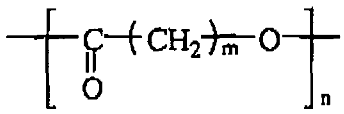

(1) ,

wherein the letter m is a number from 3 to 5, and the letter n is 5 or more. The thermoplastic polyurethane resin is one prepared by reacting a polyol compound having a number average molecular weight of 1000-5000 with a polyisocyanate compound and a chain extender. The polyol compound is typically a polyester polyol, a polyester polyether polyol, a polyester polycarbonate polyol, a polycaprolactone polyol, or a mixture thereof.

The gel electrolyte has an ionic conductivity $\sigma 1$ (S/cm), as measured by the AC impedance method at 25°C, and an ionic conductivity $\sigma 2$ (S/cm), similarly measured at -10°C, such that the ratio $\sigma 1/\sigma 2$ is from 1 to 10.

In the invention as described above, the use of a thermoplastic polyurethane resin, particularly one containing polyester units of general formula (1) below

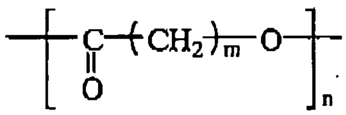

(1) ,

wherein the letter m is a number from 3 to 5 and the letter n is 5 or more, provides a suitable proportion of segments that interact with the electrolyte solution, making it possible to control the swelling ratio in the electrolyte solution within a suitable range of 150 to 800%. The resin thus bonds well with active material or activated carbon, allowing the amount of binder used to be reduced. In addition, when swollen with electrolyte solution, the resin is able to confer a high ionic conductivity, lowering the battery internal resistance.

The invention also makes it possible to obtain a binder polymer having a high adhesion to current collectors. The use, in particular, of a thermoplastic polyurethane resin as the thermoplastic resin allows the moisture content of the resin itself to be dramatically reduced. Moreover, because the thermoplastic polyurethane resin is a highly flexible resin, when employed as the binder polymer for electrodes and in ion-conductive compositions, electrodes and gel electrolytes of excellent flexibility can be produced. Furthermore, the resin has an excellent ionic conductivity at ambient and low temperatures, making it possible to lower the internal resistance, and it may be used to prepare ion-conductive compositions which can easily be formed into films. This combination of features enables the construction of non-aqueous electrolyte batteries and electrical double-layer capacitors which undergo no loss of binder composition from the electrodes, separation of the active material (or activated carbon) layer from the current collector or cracking in assembly operations and during repeated charging and discharging, and which have outstanding discharge load characteristics.

## BRIEF DESCRIPTION OF THE DRAWINGS

The objects, features and advantages of the invention will become more apparent from the following detailed description, taken in conjunction with the accompanying drawings.

FIG. 1 is a perspective view of a stacked non-aqueous electrolyte battery or electrical double-layer capacitor.
FIG. 2 is a perspective view of a fan-folded non-aqueous electrolyte battery or electrical double-layer capacitor.
FIG. 3 is a perspective view of a coiled non-aqueous electrolyte battery or electrical double-layer capacitor.
FIG. 4 is a sectional view of a coin-type non-aqueous electrolyte battery or electrical double-layer capacitor of the type produced in the examples and comparative examples described later in the specification.
FIG. 5 is a graph showing the discharge load characteristics of the secondary cell produced in Example 5.
FIG. 6 is a graph showing the ambient and low-temperature characteristics of the secondary cell produced in Example 5.

Some preferred embodiments will now be described in detail by way of example.

The gel electrolyte of the invention includes an electrolyte solution containing an ion-conductive salt and a solvent in which the ion-conductive salt is soluble, and a thermoplastic polyurethane resin having a swelling ratio from

absorption of the electrolyte solution within a range of 150 to 800%.

The ion-conductive salt in the electrolyte solution is not subject to any particular limitation. Illustrative examples of ion-conductive salts suitable for use in non-aqueous electrolyte batteries such as lithium secondary cells and lithium ion secondary cells include $LiClO_4$, $LiBF_4$, $LiAsF_6$, $LiPF_6$, $LiSbF_6$, $LiCF_3SO_3$, $LiCF_3COO$, $NaClO_4$, $NaBF_4$, NaSCN, $KBF_4$, $Mg(ClO_4)_2$, $Mg(BF_4)_2$, $(C_4H_9)_4NBF_4$, $(C_2H_5)_4NBF_4$, $(C_4H_9)_4NClO_4$, $LiN(CF_3SO_2)_2$ and $(C_2H_5)_4NPF_5$. Any one or combinations of two or more of these may be used.

In the case of electrical double-layer capacitors, any ion-conductive salt employed in conventional electrical double-layer capacitors may be used without particular limitation. Preferred examples include salts obtained by combining a quaternary onium cation of the general formula $R^1R^2R^3R^4N^+$ or $R^1R^2R^3R^4P^+$ (wherein R' to R' are each independently alkyls of 1 to 10 carbons) with an anion such as $BF_4^-$, $N(CF_3SO_2)_2^-$, $PF_6^-$ or $ClO_4^-$.

Illustrative examples include $(C_2H_5)_4PBF_4$, $(C_3H_7)_4PBF_4$, $(C_4H_9)_4PBF_4$, $(C_6H_{23})_4PBF_4$, $(C_4H_9)_3CH_3PBF_4$, $(C_2H_5)_3(Ph\text{-}CH_2)PBF_4$ (wherein Ph stands for phenyl), $(C_2H_5)_4PPF_6$, $(C_2H_5)PCF_3SO_2$, $(C_2H_5)_4NBF_4$, $(C_4H_9)_4NBF_4$, $(C_6H_{13})_4NBF_4$, $(C_2H_5)_6NPF_6$, $LiBF_4$ and $LiCF_3SO_3$. These may be used alone or as combinations of two or more thereof.

The solvent in which the ion-conductive salt is soluble is one or more of: chain ethers such as dibutyl ether, 1,2-dimethoxyethane, 1,2-ethoxymethoxyethane, methyl diglyme, methyl triglyme, methyl tetraglyme, ethyl glyme, ethyl diglyme, butyl diglyme, and glycol ethers (e.g., ethyl cellosolve, ethyl carbitol, butyl cellosolve, butyl carbitol); heterocyclic ethers such as tetrahydrofuran, 2-methyltetrahydrofuran, 1,3-dioxolane and 4,4-dimethyl-1,3-dioxane; butyrolactones such as γ-butyrolactone, γ-valerolactone, δ-valerolactone, 3-methyl-1,3-oxazolidin-2-one and 3-ethyl-1,3-oxazolidin-2-one; amide solvents (e.g., N-methylformamide, N,N-dimethylformamide, N-methylacetamide and N-methylpyrrolidinone), carbonate solvents (e.g., diethyl carbonate, dimethyl carbonate, ethylmethyl carbonate, propylene carbonate, ethylene carbonate, styrene carbonate), and imidazolidinone solvents (e.g., 1,3-dimethyl-2-imidazolidinone). These solvents may be used singly or as mixtures of two or more thereof.

In the electrolyte solution of the invention, the concentration of ion-conductive salt in the solvent is preferably 0.5 to 3.0 mol/L, and most preferably 0.7 to 2.2 mol/L.

The thermoplastic resin has a swelling ratio, as determined from the formula indicated below, within a range of 150 to 800%, preferably 250 to 500%, and most preferably 250 to 400%. At too small a swelling ratio, the ionic conductivity of the ion-conductive composition becomes unacceptably low. On the other hand, at too large a swelling ratio, the resin, when swollen with electrolyte solution, bonds poorly with active material or activated carbon and has reduced adhesion to the surface of current collectors, as a result of which the electrode binder composition tends to separate from the current collector during assembly or during repeated charging and discharging.

In working the invention, the specific method used to determine the swelling ratio involves first weighing a thermoplastic resin film formed to a given size, then immersing the thermoplastic resin film in an electrolyte solution composed of the ion-conductive salt and solvent at 20°C for 24 hours. The thermoplastic resin film is subsequently taken out of the electrolyte solution and placed between sheets of filter paper to remove solution adhering to the film surface. The thermoplastic resin swollen with the electrolyte solution it has absorbed is then weighed. The results are used to calculate the swelling ratio as follows:

$$\text{swelling ratio (\%)} = \frac{\text{weight in grams of swollen thermoplastic resin after 24 hours immersion in electrolyte solution at 20°C (g)}}{\text{weight in grams of thermoplastic resin before immersion in electrolyte solution at 20°C (g)}} \times 100 ,$$

The thermoplastic resin is preferably one which contains units of general formula (1) below

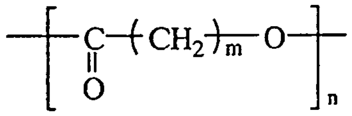

(1) .

In formula (1), the letter m is a number from 3 to 5, and preferably 5. The letter n is at least 5, preferably at least 10, and most preferably at least 15. While there is no particular upper limit for n, a number not higher than 1,000 is preferred. If n is too small, the effects achieved by introducing the polyester units of general formula (1) may diminish.

The units represented by formula (1) can be obtained by the ring-opening polymerization of a cyclic ester (lactone) such as γ-butyrolactone, δ-valerolactone or ε-caprolactone. Units obtained by the ring-opening polymerization of cyclic esters (lactones) having alkyl side chains may also be used. In the practice of the invention, a thermoplastic resin having polycaprolactone segments obtained by the ring-opening polymerization of ε-caprolactone, for which m is 5 in general formula (1), is preferred.

Thermoplastic resins of polymeric compounds containing segments other than the units represented by general formula (1) may be used, in which case it is advantageous for the proportion of units having formula (1) to be as high as possible; that is, preferably from 40 to 100 mol%, and most preferably from 70 to 100 mol%.

It is particularly advantageous for the thermoplastic resin of the invention to be a thermoplastic polyurethane resin prepared by reacting (A) a polyol compound with (B) a polyisocyanate compounds and (C) a chain extender. The polyurethane resin may be used in combination with other thermoplastic resins, in which case the amount of polyurethane resin, based on the overall thermoplastic resin, is preferably 1 to 100 % by weight. Even the addition of a small amount of the polyurethane resin relative to the overall thermoplastic resin can impart a high ionic conductivity at ambient or low temperatures.

Illustrative examples of other thermoplastic resins that may be used together with the thermoplastic polyurethane resin include fluoropolymers such as polyvinylidene fluoride and polytetrafluoroethylene, synthetic rubbers such as styrene elastomers, olefin elastomers and styrene-butadiene rubber; polyolefins such as polyethylene and polypropylene; and polyethers such as polyethylene glycol and polypropylene glycol. Any one or combinations of two or more of these may be used.

In the invention, the thermoplastic polyurethane resin includes not only polyurethane resins having urethane linkages, but also polyurethane-urea resins having both urethane linkages and urea linkages.

The polyol compound serving as component (A) above is preferably one prepared by the dehydration or dealcoholation of any of compounds (i) to (vi) below, and most preferably a polyester polyol, a polyester polyether polyol, a polyester polycarbonate polyol, a polycaprolactone polyol, or a mixture thereof:

(i) polyester polyols prepared by the ring-opening polymerization of one or more cyclic ester (lactone;
(ii) polyester polyols prepared by reacting at least one of the above polyester polyols obtained by the ring-opening polymerization of cyclic esters (lactones) with at least one carboxylic acid and at least one compound selected from the group consisting of dihydric aliphatic alcohols, carbonate compounds, polycarbonate polyols and polyether polyols;
(iii) polyester polyols prepared by reacting at least one carboxylic acid with at least one dihydric aliphatic alcohol;
(iv) polyester polycarbonate polyols prepared by reacting at least one carboxylic acid with at least one polycarbonate polyol;
(v) polyester polyether polyols prepared by reacting at least one carboxylic acid with at least one polyether polyol; and
(vi) polyester polyols prepared by reacting at least one carboxylic acid with two or more compounds selected from the group consisting of dihydric aliphatic alcohols, polycarbonate polyols and polyether polyols.

Examples of suitable cyclic esters (lactones) include γ-butyrolactone, δ-valerolactone and ε-caprolactone.

Examples of suitable carboxylic acids include linear aliphatic dicarboxylic acids having 5 to 14 carbons, such as glutaric acid, adipic acid, pimelic acid, suberic acid, azelaic acid, sebacic acid and dodecanedioic acid; branched aliphatic dicarboxylic acids having 5 to 14 carbons, such as 2-methylsuccic acid, 2-methyladipic acid, 3-methyladipic acid, 3-methylpentanedioic acid, 2-methyloctanedioic acid, 3,8-dimethyldecanedioic acid and 3,7-dimethyldecanedioic acid; aromatic dicarboxylic acids such as terephthalic acid, isophthalic acid and o-phthalic acid; and ester-forming derivatives thereof. Any one or combinations of two or more of the above may be used. Of these, linear or branched aliphatic dicarboxylic acids having 5 to 14 carbons are preferred. The use of adipic acid, azelaic acid or sebacic acid is especially preferred.

Examples of suitable divalent aliphatic alcohols include linear aliphatic diols of 2 to 14 carbons, such as ethylene glycol, 1,3-propanediol, 1,4-butanediol, 1,5-pentanediol, 1,6-hexanediol, 1,7-heptanediol, 1,8-octanediol, 1,9-nonanediol and 1,10-decanediol; branched aliphatic diols of 3 to 14 carbons, including 2-methyl-1,3-propanediol, neopentyl glycol, 3-methyl-1,5-pentanediol and 2-methyl-1,8-octanediol; and alicyclic diols such as cyclohexanedimethanol and cyclohexanediol. Any one or combinations of two or more of the above may be used. Of these, branched aliphatic diols of 4 to 10 carbons are preferred, and 3-methyl-1,5-pentanediol is especially preferred.

Examples of suitable carbonate compounds include dialkyl carbonates such as dimethyl carbonate and diethyl carbonate, alkylene carbonates such as ethylene carbonate, and diaryl carbonates such as diphenyl carbonate.

Suitable polycarbonate polyols include those prepared by a dealcoholation reaction between a polyhydric alcohol and one or more of the above carbonate compounds. Illustrative examples of the polyhydric alcohol include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, diethylene glycol and 1,4-cyclohexanedimethanol.

Suitable polyether polyols include polyethylene glycol, polypropylene glycol, ethylene oxide/propylene oxide copolymers and polyoxytetramethylene glycol. Any one or combinations of two or more of these may be used.

The polyol compound serving as component (A) has a number-average molecular weight of preferably 1,000 to 5,000, and most preferably 1,500 to 3,000. A polyol compound having too small a number-average molecular weight may lower the physical properties of the resulting thermoplastic polyurethane resin film, such as the heat resistance and tensile elongation. On the other hand, too large a number-average molecular weight increases the viscosity during synthesis, which may lower the production stability of the thermoplastic polyurethane resin being prepared. The number-average molecular weights used here in connection with polyol compounds are calculated based on the hydroxyl values measured in accordance with JIS K1577.

Illustrative examples of the polyisocyanate compound serving as above component (B) include aromatic diisocyanates such as tolylene diisocyanate, 4,4'-diphenylmethane diisocyanate, p-phenylene diisocyanate, 1,5-naphthylene diisocyanate, 3,3'-dichloro-4,4'-diphenylmethane diisocyanate and xylylene diisocyanate; and aliphatic or alicyclic diisocyanates such as hexamethylene diisocyanate, isophorone diisocyanate, 4,4'-dicyclohexylmethane diisocyanate and hydrogenated xylylene diisocyanate.

The chain extender serving as above component (C) is preferably a low-molecular-weight compound having a molecular weight of not more than 300 and bearing two active hydrogen atoms capable of reacting with isocyanate groups.

Illustrative examples of such low-molecular-weight compounds include aliphatic diols such as ethylene glycol, diethylene glycol, propylene glycol, 1,3-propanediol, 1,4-butanediol, 1,5-pentanediol, 1,6-hexanediol, 1,7-heptanediol, 1,8-octanediol and 1,9-nonanediol; aromatic or alicyclic diols such as 1,4-bis(β-hydroxyethoxy)benzene, 1,4-cyclohexanediol, bis(β-hydroxyethyl) terephthalate and xylylene glycol; diamines such as hydrazine, ethylenediamine, hexamethylenediamine, propylenediamine, xylylenediamine, isophoronediamine, piperazine, piperazine derivatives, phenylenediamine and tolylenediamine; and amino alcohols such as adipoyl hydrazide and isophthaloyl hydrazide. Any one or combinations of two or more of these may be used.

In preparing a thermoplastic polyurethane resin for use in the invention, it is advantageous to react components

(A) to (C) in the following proportions:

(A) 100 parts by weight of the polyol compound;
(B) 5 to 200 parts by weight, and preferably 20 to 100 parts by weight, of the polyisocyanate compound;
(C) 1 to 200 parts by weight, and preferably 5 to 100 parts by weight, of the chain extender.

In addition to above components (A) to (C), a filler may also be added to the thermoplastic polyurethane resin to enhance the ion permeability.

Any suitable filler which forms, together with the polymer making up the separator, a matrix having at the filler-polymer interfaces fine pores in which the electrolyte solution can be impregnated may be used without particular limitation. The filler may be either an inorganic or organic material, and can have a broad range of physical characteristics such as particle shape and size, density and surface state. Exemplary fillers include both inorganic powders such as various oxides, carbonates and sulfates (e.g., silicon dioxide, titanium oxide, aluminum oxide, zinc oxide, calcium carbonate, calcium sulfate, tin oxide, chromium oxide, iron oxide, magnesium oxide, magnesium carbonate and magnesium sulfate), carbides (e.g., silicon carbide, calcium carbide) and nitrides (e.g., silicon nitride, titanium nitride); and organic powders such as various types of polymer particles that do not form a compatible mixture with the polymer matrix making up the separator.

No particular limitation is imposed on the particle size of the filler, although the particle size is preferably not more than 10 μm, more preferably from 0.005 to 1 μm, and most preferably from 0.01 to 0.8 μm. The amount in which the filler is added to the thermoplastic resin varies depending on the type of thermoplastic resin used and the type of filler, although the addition of 5 to 100 parts by weight, and especially 30 to 100 parts by weight, of filler per 100 parts by weight of the thermoplastic resin is preferred.

In the practice of the invention, the process used to prepare the thermoplastic polyurethane resin is not subject to any particular limitation. Production is typically carried out by a prepolymer process or a one-shot process in which the polyol compound (component A), the polyisocyanate compound (component B), the chain extender (component C), and any other components that may be needed are added together and subjected to a known urethane formation reaction in the presence of a known urethane formation catalyst. A process in which melt polymerization is carried out in a substantially solvent-free state is preferred, and a process involving continuous melt polymerization using a multi-screw extruder is especially preferred.

The resulting thermoplastic polyurethane resin has a weight-average molecular weight of preferably 5,000 to 500,000, and most preferably 10,000 to 300,000. The polyurethane resin also has an NCO index ([NCO]/[OH]), which represents the ratio of overall moles of hydroxyl groups (OH), or active hydrogens, on the polyol compound serving as

component A to overall moles of isocyanate groups (NCO) on the polyisocyanate compound serving as component C, of 0.95 to 1.05, and preferably 1.0 to 1.03.

The thermoplastic polyurethane resin can easily be rendered into a film and formed into the shape of a separator by a hot melt extrusion (film-forming) process or a solvent casting process. Use may be made of either a process in which the thermoplastic polyurethane resin is directly cast onto a positive or negative electrode plate, or a process in which the thermoplastic polyurethane resin is melt laminated onto a positive or negative electrode plate.

In the hot melt extrusion process, a film is formed by holding the thermoplastic polyurethane resin above the melting point of the resin so that it melts, extruding the molten resin from a T-die or slit nozzle, stretching the extruded resin if necessary, and cooling. Film having a thickness of about 20 μm to 1 mm can be produced by this hot melt extrusion process.

In the solvent casting process, the thermoplastic polyurethane resin is dissolved in a suitable solvent so as to form a solution, which is cast onto a flat supporting plate with a doctor knife or a bar coater. The solvent is then evaporated off, thereby forming a film.

The gel electrolyte according to another aspect of the invention is prepared by immersing the resulting thermoplastic polyurethane resin film in an electrolyte solution composed of the above-described ion-conductive salt and a solvent in which the salt is soluble so as to effect swelling of the film. The immersion conditions in the electrolyte solution are not subject to any particular limitation, although immersion at 20 to 30°C for 24 hours is typical.

The gel electrolyte thus prepared has an ionic conductivity, as measured by the AC impedance method at 25°C, of preferably at least $1 \times 10^{-3}$ S/cm, and more preferably from $1 \times 10^{-3}$ S/cm to $7 \times 10^{-3}$ S/cm. Moreover, it has an ionic conductivity σ1 (S/cm), as measured by the AC impedance method at 25°C, and an ionic conductivity σ2 (S/cm), as measured by the AC impedance method at -10°C, such that the ratio σ1/σ2 is preferably from 1 to 10, and more preferably from 1 to 7. That is, the gel electrolyte has a sufficient ionic conductivity both at ambient and low temperatures.

As noted above, the ion-conductive composition of the invention has a swell ratio which is suitable for the preparation of a gel electrolyte, and also has a high ionic conductivity. Moreover, the ion-conductive composition can be heat-treated to remove volatile components, enabling it to be used as a solid polymer electrolyte.

The non-aqueous electrolyte batteries according to other aspects of the invention are composed of a positive electrode, a negative electrode, a separator disposed between the positive and negative electrodes, and an electrolyte solution.

The positive electrode is produced by coating a current collector with a positive electrode binder composition prepared by dispersing primarily a thermoplastic resin and a positive electrode active material in a solvent. The negative electrode is produced by coating a current collector with a negative electrode binder composition prepared by dispersing primarily a thermoplastic resin and a negative electrode active material in a solvent. By employing for this purpose a thermoplastic resin having a glass transition temperature (Tg) which is lower than the freezing point (Fp) of the non-aqueous electrolyte used in the battery, electrodes can be produced which have excellent discharge characteristics at low temperatures. This in turn enables the production of batteries having excellent low-temperature characteristics.

The thermoplastic resin used in the binder composition is preferably a thermoplastic resin which satisfies the condition Fp > Tg. However, it is entirely conceivable that there will be cases where, owing to such factors as resin cost, handleability and mechanical strength, it may be impossible to use a binder composition in which 100 % by weight of the thermoplastic resin satisfies the condition Fp > Tg. In such cases, the low-temperature characteristics are improved even with the addition of 1 to 20 % by weight, and typically about 5 % by weight, based on the overall thermoplastic resin weight in the binder composition, of a thermoplastic resin which satisfies the condition Fp > Tg.

Such resins are preferably thermoplastic resins having a swelling ratio, as defined above, of 150 to 800% and containing units of the formula $-(CO(CH_2)_mO)_n-$. Thermoplastic polyurethane resins having a swelling ratio of 150 to 800 % and containing units of the formula $-(CO(CH_2)_mO)_n-$ are especially preferred.

Other resins that may be used include polyalkylene oxides having an average molecular weight of up to 1,000 and derivatives thereof, as well as polysaccharide derivatives having oxyalkylene branches, polyglycidols and polyglycidol derivatives, and polyvinyl alcohols and polyvinyl alcohol derivatives. The above-described polyurethanes are especially preferred.

One, or both, of the positive and negative electrodes employed in the inventive battery is formed using the above-described thermoplastic resin of the invention as the binder. By filling these positive and negative electrodes with an electrolyte solution containing an ion-conductive salt and a solvent in which the salt is soluble, and thus causing the electrodes to absorb the electrolyte solution and swell, there can be obtained positive and negative electrodes having both a high ionic conductivity and excellent discharge characteristics at low temperatures.

The positive electrode is made of a positive electrode current collector coated on one or both sides thereof with a positive electrode binder composition composed primarily of a thermoplastic resin and a positive electrode active material. The thermoplastic resin is preferably one having a glass transition temperature (Tg) lower than the freezing point (Fp) of the non-aqueous electrolyte used in the battery. Moreover, use of the above-described thermoplastic resin of the invention having a swelling ratio within a range of 150 to 800%, particularly a thermoplastic resin having specific

polyester units, and most particularly a thermoplastic polyurethane resin, is advantageous because the resin has a high ionic conductivity when swollen with the electrolyte solution, bonds well with the positive electrode active material, increases adhesion of the binder composition to the metal surface of the positive electrode current collector, and makes it possible to produce a battery having excellent discharge properties at low temperatures. The positive electrode can be produced by melting and blending the positive electrode binder composition composed primarily of thermoplastic resin and positive electrode active material, and extruding the melt as a film.

The positive electrode current collector may be made of a suitable material such as stainless steel, aluminum, titanium, tantalum or nickel. Of these, aluminum is especially preferred both in terms of performance and cost. The current collector used may be in any of various forms, including foil, expanded metal, sheet, foam, wool, or a three-dimensional structure such as a net.

The positive electrode active material is selected as appropriate for the electrode application, the type of battery and other considerations. For instance, examples of positive electrode active materials that are suitable for use in the positive electrode of a lithium secondary cell include group I metal compounds such as CuO, $Cu_2O$, $Ag_2O$, CuS and $CuSO_2$; group IV metal compounds such as TiS, $SiO_2$ and SnO; group V metal compounds such as $V_2O_5$, $V_6O_{13}$, $Vo_x$, $Nb_2O_5$, $Bi_2O_3$ and $Sb_2O_3$; group VI metal compounds such as $CrO_3$, $Cr_2O_3$, $MoO_3$,$MoS_2$, $WO_3$ and $SeO_2$; group VII metal compounds such as $MnO_2$ and $Mn_2O_4$; group VIII metal compounds such as $Fe_2O_3$, FeO, $Fe_3O_4$, $Ni_2O_3$, NiO and $CoO_2$; and conductive polymeric compounds such as polypyrrole, polyaniline, poly(p-phenylene), polyacetylene and polyacene.

Suitable positive electrode active materials that may be used in lithium ion secondary cells include chalcogen compounds capable of adsorbing and releasing lithium ions, and lithium ion-containing chalcogen compounds.

Examples of such chalcogen compounds capable of adsorbing and releasing lithium ions include $FeS_2$, $TiS_2$, $MoS_2$, $V_2O_5$, $V_6O_{13}$ and $MnO_2$.

Specific examples of lithium ion-containing chalcogen compounds include $LiCoO_2$, $LiMnO_2$, $LiMn_2O_4$, $LiMo_2O_4$, $LiV_3O_8$, $LiNiO_2$ and $Li_xNi_yM_{1-y}O_2$ (wherein M is at least one metal element selected from among cobalt, manganese, titanium, chromium, vanadium, aluminum, tin, lead and zinc; $0.05 \leq x \leq 1.10$; and $0.5 \leq y \leq 1.0$).

In addition to the thermoplastic polyurethane resin and the positive electrode active material described above, if necessary, the binder composition for the positive electrode may include also a conductive material. Illustrative examples of the conductive material include carbon black, Ketjen black, acetylene black, carbon whiskers, carbon fibers, natural graphite, and artificial graphite.

The positive electrode binder composition of the invention typically includes 1,000 to 5,000 parts by weight, and preferably 1,200 to 3,500 parts by weight, of the positive electrode active material and 20 to 500 parts by weight, and preferably 50 to 400 parts by weight, of the conductive material per 100 parts by weight of the thermoplastic resin.

Because the positive electrode binder composition of the invention provides good bonding of the positive active material particles and has a high adhesion to the positive electrode current collector, a positive electrode can be produced with the addition of only a small amount of thermoplastic resin (binder polymer). The high ionic conductivity of the binder composition when swollen with electrolyte solution lowers the internal resistance of the battery, thus enhancing the discharge characteristics at low temperatures.

The positive electrode binder composition of the invention is generally used together with a dispersant in the form of a paste. Suitable dispersants include polar solvents such as N-methyl-2-pyrrolidone, dimethylformamide, dimethylacetamide and dimethylsulfamide. The dispersant is typically added in an amount of about 30 to 300 parts by weight per 100 parts by weight of the positive electrode binder composition.

No particular limitation is imposed on the method of shaping the positive electrode as a thin film, although it is preferable to apply the composition by a suitable means such as roller coating with an applicator roll, screen coating, doctor blade coating, spin coating or bar coating so as to form an active material layer having a uniform thickness when dry of 10 to 200 μm, and especially 50 to 150 μm.

The negative electrode is made of a negative electrode current collector coated on one or both sides thereof with a negative electrode binder composition composed primarily of a thermoplastic resin and a negative electrode active material. The same thermoplastic resin may be used as in the positive electrode. The negative electrode can be produced by melting and blending the negative electrode binder composition composed primarily of thermoplastic resin and negative electrode active material, then extruding the melt as a film.

The negative electrode current collector may be made of a suitable material such as copper, stainless steel, titanium or nickel. Of these, copper is especially preferred both in terms of performance and cost. The current collector used may be in any of various forms, including foil, expanded metal, sheet, foam, wool, or a three-dimensional structure such as a net.

The negative electrode active material is selected as appropriate for the electrode application, the type of battery and other considerations. Materials suitable for use in the negative electrode of a lithium secondary cell, for example, include alkali metals, alkali metal alloys, carbon materials, and the same materials as mentioned above for the positive electrode active material.

Examples of suitable alkali metals include lithium, sodium and potassium. Examples of suitable alkali metal alloys include Li-Al, Li-Mg, Li-Al-Ni, Na-Hg and Na-Zn.

Examples of suitable carbon materials include graphite, carbon black, coke, glassy carbon, carbon fibers, and sintered bodies obtained from any of these.

In a lithium ion secondary cell, use may be made of a material which reversibly holds and releases lithium ions. Suitable carbon materials capable of reversibly holding and releasing lithium ions include non-graphitizable carbon materials and graphite materials. Specific examples include pyrolytic carbon, coke (e.g., pitch coke, needle coke, petroleum coke), graphites, glassy carbons, fired organic polymeric materials (materials such as phenolic resins or furan resins that have been carbonized by firing at a suitable temperature), carbon fibers, and activated carbon. Use can also be made of materials capable of reversibly holding and releasing lithium ions, including polymers such as polyacetylene and polypyrrole, and oxides such as $SnO_2$.

In addition to the thermoplastic polyurethane resin and the negative electrode active material described above, if necessary, the binder composition for the negative electrode may include also a conductive material. Illustrative examples of the conductive material include carbon black, Ketjenblack, acetylene black, carbon whiskers, carbon fibers, natural graphite, and artificial graphite.

The negative electrode binder composition of the invention typically includes 500 to 1,700 parts by weight, and preferably 700 to 1,300 parts by weight, of the negative electrode active material and 0 to 70 parts by weight, and preferably 0 to 40 parts by weight, of the conductive material per 100 parts by weight of the thermoplastic resin.

Because the negative electrode binder composition of the invention provides good bonding of the negative active material particles and has a high adhesion to the negative electrode current collector, a negative electrode can be produced with the addition of only a small amount of thermoplastic resin (binder polymer). The high ionic conductivity of the binder composition when swollen with electrolyte solution lowers the internal resistance of the battery, thus enhancing the discharge characteristics at low temperatures.

The negative electrode binder composition of the invention is generally used together with a dispersant in the form of a paste. Suitable dispersants include polar solvents such as N-methyl-2-pyrrolidone, dimethylformamide, dimethylacetamide and dimethylsulfamide. The dispersant is typically added in an amount of about 30 to 300 parts by weight per 100 parts by weight of the negative electrode binder composition.

No particular limitation is imposed on the method for shaping the negative electrode as a thin film, although it is preferable to apply the composition by a suitable means such as roller coating with an applicator roll, screen coating, doctor blade coating, spin coating or bar coating so as to form an active material layer having a uniform thickness after drying of 10 to 200 μm, and especially 50 to 150 μm.

It is advantageous for the thermoplastic resins used in the binder compositions for the positive electrode and the negative electrode to be resins having a glass transition temperature (Tg) which is lower than the freezing point (Fp) of the non-aqueous electrolyte used in the battery. Such resins are preferably thermoplastic resins having a swelling ratio, as defined above, of 150 to 800% and containing units of the formula $-(CO(CH_2)_mO)_n-$. Thermoplastic polyurethane resins having a swelling ratio of 150 to 800% and containing units of the formula $-(CO(CH_2)_mO)_n-$ are especially preferred.

By including the foregoing resin in an amount of 1 to 100 % by weight within the binder compositions for the positive and negative electrodes, there can obtained electrodes in which the resin bonds well with the active material, and which exhibit an excellent ionic conductivity and a high mechanical strength. Such electrodes in turn make it possible to produce batteries having good charge-discharge cycle properties and a good low-temperature discharge capability. Even the addition of 1 to 20 % by weight of the above resin makes it possible to produce electrodes having good discharge characteristics, particularly at low temperatures, which in turn enables the production of batteries having a good low-temperature capability.

The separator disposed between the resulting positive and negative electrodes is preferably (1) a separator prepared by impregnating a separator base with an electrolyte solution, or (2) the above-described gel electrolyte of the invention. The electrolyte solution used may be the same as that described above.

Suitable examples of the separator base used in the first type of separator (1) include the following polymers: fluoropolymers, polyethers such as polyethylene oxide and polypropylene oxide, polyolefins such as polyethylene and polypropylene, polyacrylonitrile, polyvinylidene chloride, polymethyl methacrylate, polymethyl acrylate, polyvinyl alcohol, polymethacrylonitrile, polyvinyl acetate, polyvinyl pyrrolidone, polyethyleneimine, polybutadiene, polystyrene, polyisoprene, polyurethane, and derivatives thereof. These may be used singly or as combinations of two or more thereof. A fluoropolymer is especially preferred.

Illustrative examples of suitable fluoropolymers include polyvinylidene fluoride (PVDF), vinylidene fluoride-hexafluoropropylene (HFP) copolymer (P(VDF-HFP)), vinylidene fluoride-chlorotrifluoroethylene (CTFE) copolymer (P (VDF-CTFE)), vinylidene fluoride-hexafluoropropylene fluororubber (P(VDF-HFP)), vinylidene fluoride-tetrafluoroethylene-hexafluoropropylene fluororubber (P(VDF-TFE-HFP)) and vinylidene fluoride-tetrafluoroethylene-perfluoro(alkyl vinyl ether) fluororubber. Vinylidene fluoride polymers have a vinylidene fluoride content of preferably at least 50 wt %, and more preferably at least 70 wt %, but not more than about 97 wt %. Of these, polyvinylidene fluoride (PVDF),

copolymers of vinylidene fluoride and hexafluoropropylene (P(VDF-HFP)), and copolymers of vinylidene fluoride and chlorotrifluoroethylene (P(VDF-CTFE)) are preferred. The use of a copolymer is especially desirable because it lowers the crystallinity, thus allowing for easier impregnation as well as easier retention of the electrolyte solution. In the invention, use may be made of either a high-swelling polymer or a low-swelling polymer such as polyvinylidene fluoride.

A filler may be added to the separator base. Any suitable filler which forms, together with the polymer making up the separator, a matrix having at the filler-polymer interfaces fine pores in which the electrolyte solution can be impregnated may be used without particular limitation. The filler may be either an inorganic or organic material, and can have a broad range of physical characteristics such as particle shape and size, density and surface state. Exemplary fillers include both inorganic powders such as various oxides, carbonates and sulfates (e.g., silicon dioxide, titanium oxide, aluminum oxide, zinc oxide, calcium carbonate, calcium sulfate, tin oxide, chromium oxide, iron oxide, magnesium oxide, magnesium carbonate and magnesium sulfate), carbides (e.g., silicon carbide, calcium carbide) and nitrides (e.g., silicon nitride, titanium nitride); and organic powders composed of various types of polymer particles that do not form a compatible mixture with the polymer matrix.

No particular limitation is imposed on the particle size of the filler, although the particle size is preferably not more than 10 μm, more preferably from 0.005 to 1 μm, and most preferably from 0.01 to 0.8 μm. The amount in which the filler is added to the polymer varies depending on the type of polymer used and the type of filler, although the addition of 5 to 100 parts by weight, and especially 30 to 100 parts by weight, of filler per 100 parts by weight of the polymer is preferred.

Alternatively, the above-described gel electrolyte according to the invention may be used as the separator. Such a gel electrolyte has a high ionic conductivity and a suitable swelling ratio. In addition, the polymer within the gel electrolyte has the same composition as the binder polymer used in the electrodes, thus helping to further lower the battery internal resistance.

Non-aqueous electrolyte batteries according to the invention are assembled by stacking (see FIG. 1), fan-folding (FIG. 2), winding (FIG. 3) or forming into a coin-like shape (FIG. 4) a cell assembly composed of a separator disposed between a positive electrode and a negative electrode, each of these components being prepared as described above, and placing the cell assembly within a battery housing such as a battery can or a laminate pack. The cell assembly is then filled with electrolyte solution, and the battery housing is mechanically sealed if it is a can or heat-sealed if it is a laminate pack.

The electrolyte solution may be one composed of the ion-conductive salt and the solvent in which the ion-conductive salt is soluble. If necessary, a reaction-curable substance such as (meth)acrylate, an epoxy group-bearing compound or a heat-curable urethane may be added and the solution reaction-cured.

Because the binder compositions used in the positive and negative electrodes of the resulting non-aqueous electrolyte battery of the invention contain a resin constituent which bonds well with the active materials, have a high adhesion to the metal foil current collectors and are endowed with outstanding strength, and because the battery uses an ion-conductive composition containing a resin having a suitable swelling ratio in an electrolyte solution, problems such as the loss of binder composition from the electrodes and separation of the active material layer from the current collectors do not arise in assembly operations or during repeated charging and discharging.

The non-aqueous electrolyte battery of the invention has excellent discharge load characteristics. Specifically, when a positive electrode current collector coated with a positive electrode binder composition composed primarily of the thermoplastic resin of the invention and a positive electrode active material is used as the positive electrode, metallic lithium is used as the negative electrode, the upper limit voltage during charging is set at 4.2 V, the final voltage during discharging is set at 3 V, the current during charging is set at 0.5 $mA/cm^2$ (equivalent to 0.2 C), and discharging is carried out at current levels of 0.5 $mA/cm^2$ (0.2 C) and 2.5 $mA/cm^2$ (1.0 C), the battery has a discharge capacity when discharged at 2.5 $mA/cm^2$ (1.0 C) which is at least 90%, and preferably at least 95%, the discharge capacity when discharged at 0.5 $mA/cm^2$ (0.2 C).

Non-aqueous electrolyte batteries according to the invention, such as lithium secondary cells and lithium ion secondary cells, are well-suited for use in a broad range of applications, including main power supplies and memory backup power supplies for portable electronic equipment such as camcorders, notebook computers, mobile phones and what are known as "personal handyphone systems" (PHS) in Japan, uninterruptible power supplies for equipment such as personal computers, in transport devices such as electric cars and hybrid cars, and together with solar cells as energy storage systems for solar power generation.

The electrical double-layer capacitors according to other aspects of the invention are composed of a pair of polarizable electrodes, a separator disposed between the polarizable electrodes, and an electrolyte solution. Either or both of the pair of polarizable electrodes is made of a current collector coated with a polarizable electrode binder composition composed primarily of the thermoplastic resin of the invention and activated carbon.

The above polarizable electrodes are produced by coating a current collector with a polarizable electrode binder composition prepared by dispersing primarily a thermoplastic resin and activated carbon in a solvent. By employing for this purpose a thermoplastic resin having a glass transition point (Tg) which is lower than the freezing point (Fp) of the

electrolyte solution used in the electrical double-layer capacitor, electrodes can be produced which have excellent discharge characteristics at low temperatures. This in turn enables the production of electrical double layer capacitors having excellent low-temperature characteristics.

The thermoplastic resin used in the binder composition is preferably a thermoplastic resin which satisfies the condition Fp > Tg. However, it is entirely conceivable that there will be cases where, owing to such factors as resin cost, handleability and mechanical strength, it may be impossible to use a binder composition in which 100 % by weight of the thermoplastic resin satisfies the condition Fp > Tg. In such cases, the low-temperature characteristics are improved even with the addition of 1 to 20 % by weight, and typically about 5 % by weight, based on the overall thermoplastic resin weight in the binder composition, of a thermoplastic resin which satisfies the condition Fp > Tg.

Such resins are preferably thermoplastic resins having a swelling ratio, as defined above, of 150 to 800% and containing units of the formula $-(CO(CH_2)_mO)_n-$. Thermoplastic polyurethane resins having a swelling ratio of 150 to 800% and containing units of the formula $-(CO(CH_2)_mO)_n-$ are especially preferred.

Such polyurethanes are preferred because they have a high ionic conductivity when swollen with the electrolyte solution, they bond well with the activated carbon, and they increase adhesion of the binder composition to the metal surface of the current collector. The polarizable electrodes can be produced by melting and blending a polarizable electrode binder composition containing primarily a thermoplastic resin and activated carbon, and extruding the melt as a film.

Exemplary activated carbons include those manufactured from plant-based materials such as wood, sawdust, coconut shells and pulp spent liquor; fossil fuel-based materials such as coal and petroleum fuel oil, as well as fibers spun from coal or petroleum-based pitch obtained by the hydrolysis of such fossil fuel-based materials or from tar pitch; and synthetic polymers, phenol resins, furan resins, polyvinyl chloride resins, polyvinylidene chloride resins, polyimide resins, polyamide resins, liquid-crystal polymers, plastic waste and reclaimed tire rubber. These starting materials are carbonized, then activated. There are two major kinds of activation processes: gas activation and chemical activation. In gas activation, the carbonized feedstock is catalytically reacted at an elevated temperature with an oxidizing gas such as steam, carbon dioxide or oxygen to form activated carbon. In chemical activation, the feedstock is uniformly impregnated with an activating chemical agent and heated in an inert gas atmosphere. The chemical agent induces a dehydrating and oxidizing reaction which produces an activated carbon. Examples of chemical agents that may be used for this purpose include zinc chloride, phosphoric acid, sodium phosphate, calcium chloride, potassium sulfate, potassium hydroxide, sodium hydroxide, potassium carbonate, sodium carbonate, sodium sulfate, potassium sulfate and calcium carbonate. The activated carbon may be in any of various forms, including ground or granulated particles, fibers, felt, woven fabric or sheet, any of which may be used in the present invention. Activated carbons prepared by chemical activation using potassium hydroxide are especially preferred because they tend to provide a larger electrostatic capacitance than steam-activated product.

The amount of activated carbon included is 500 to 10,000 parts by weight, and preferably 1,000 to 4,000 parts by weight, per 100 parts by weight of the thermoplastic resin. The addition of too much activated carbon may lower the bond strength of the polarizable electrode binder composition, resulting in poor adhesion to the current collector. On the other hand, too little activated carbon may have the effect of increasing the electrical resistance, and thus lowering the electrostatic capacitance, of the polarizable electrodes produced from the composition.

In addition to the thermoplastic resin and the activated carbon described above, the polarizable electrode binder composition may also include, if necessary, a conductive material.

The conductive material may be any suitable material capable of conferring electrical conductivity to the polarizable electrode binder composition. Illustrative examples include carbon black, Ketjenblack, acetylene black, carbon whiskers, carbon fibers, natural graphite, artificial graphite, titanium oxide, ruthenium oxide, and metallic fibers such as aluminum or nickel. Any one or combinations of two or more thereof may be used. Of these, Ketjenblack and acetylene black, which are both types of carbon black, are preferred. The average particle size of the conductive material powder is preferably 10 to 100 nm, and especially 20 to 40 nm.

The amount of conductive material included in the binder composition is preferably 0 to 300 parts by weight, and especially 50 to 200 parts by weight, per 100 parts by weight of the thermoplastic resin. The presence of too much conductive material in the composition reduces the proportion of the activated carbon, which may lower the electrostatic capacitance of the polarizable electrodes obtained from the composition. On the other hand, the addition of too little conductive material may fail to confer adequate electrical conductivity.

Because the polarizable electrode binder composition of the invention provides good bonding of the activated carbon particles and has a high adhesion to the current collector, an electrode can be produced with the addition of only a small amount of the thermoplastic resin (binder polymer). The high ionic conductivity of the binder composition when swollen with electrolyte solution makes it possible to lower the internal resistance of the electrical double-layer capacitor.

The polarizable electrode binder composition of the invention is generally used together with a diluting solvent in the form of a paste. Suitable diluting solvents include N-methyl-2-pyrrolidone, acetonitrile, tetrahydrofuran, acetone, methyl ethyl ketone, 1,4-dioxane and ethylene glycol dimethyl ether. The diluting solvent is typically added in an amount

of about 30 to 300 parts by weight per 100 parts by weight of the polarizable electrode binder composition.

No particular limitation is imposed on the method for shaping the polarizable electrode as a thin film, although it is preferable to apply the composition by a suitable means such as roller coating with an applicator roll, screen coating, doctor blade coating, spin coating or bar coating so as to form an activated carbon layer having a uniform thickness after drying of 10 to 500 μm, and especially 50 to 400 μm.

It is advantageous for the thermoplastic resin used in the polarizable electrode binder composition to be a resin having a glass transition temperature (Tg) which is lower than the freezing point (Fp) of the non-aqueous electrolyte used in the electrical double-layer capacitor. Such resins are preferably thermoplastic resins having a swelling ratio, as defined above, of 150 to 800% and containing units of the formula $-(CO(CH_2)_mO)_n-$. Thermoplastic polyurethane resins having a swelling ratio of 150 to 800% and containing units of the formula $-(CO(CH_2)_mO)_n-$ are especially preferred.

By including the foregoing resin in an amount of 1 to 100 % by weight within the polarizable electrode binder composition, there can be obtained electrodes in which the resin bonds well with the activated carbon, and which exhibit an excellent ionic conductivity and a high mechanical strength. Such electrodes in turn make it possible to produce electrical double-layer capacitors having good charge-discharge cycle properties and a good low-temperature discharge capability. Even the addition of 1 to 20 % by weight of the above resin makes it possible to produce electrodes having good discharge characteristics, particularly at low temperatures, which in turn enables the production of electrical double-layer capacitors having a good low-temperature capability.

The separator disposed between the resulting pair of polarizable electrodes is preferably (1) a separator prepared by impregnating a separator base with an electrolyte solution, or (2) the above-described gel electrolyte of the invention.

Suitable examples of the separator base used in the first type of separator (1) include materials commonly used as a separator base in electrical double-layer capacitors. Illustrative examples include polyethylene nonwoven fabric, polypropylene nonwoven fabric, polyester nonwoven fabric, PTFE porous film, kraft paper, sheet laid from a blend of rayon fibers and sisal fibers, manila hemp sheet, glass fiber sheet, cellulose-based electrolytic paper, paper made from rayon fibers, paper made from a blend of cellulose and glass fibers, and combinations thereof in the form of multilayer sheets. The electrolyte solution used may be the same as that in the above-described ion-conductive composition of the invention.

Alternatively, the above-described gel electrolyte according to the invention may be used as the separator. Such a gel electrolyte has a high ionic conductivity and a suitable swelling ratio. In addition, the polymer within the gel electrolyte has the same composition as the binder polymer used in the electrodes, thus helping to further lower the internal resistance of the capacitor.

Electrical double-layer capacitors according to the invention are assembled by stacking (see FIG. 1), fan-folding (FIG. 2), winding (FIG. 3) or forming into a coin-like shape (FIG. 4) an electrical double-layer capacitor assembly composed of a separator disposed between a pair of polarizable electrodes, and placing the assembly within a capacitor housing such as a capacitor can or a laminate pack. The assembly is then filled with electrolyte solution, and the capacitor housing is mechanically sealed if it is a can or heat-sealed if it is a laminate pack.

The electrolyte solution may be one composed of the ion-conductive salt and the solvent in which the ion-conductive salt is soluble. If necessary, a reaction-curable substance such as (meth)acrylate, an epoxy group-bearing compound or a heat-curable urethane may be added and the solution reaction-cured.

Because the polarizable electrode binder compositions used in the resulting electrical double-layer capacitor of the invention contain a resin constituent which bonds well with activated carbon and conductive materials, have a high adhesion to metal foil current collectors and are endowed with outstanding strength, and because the capacitor uses an ion-conductive composition containing a resin having a suitable swelling ratio in an electrolyte solution, problems such as the loss of binder composition from the polarizable electrodes and separation of the activated carbon layer from the current collectors do not arise in assembly operations or during repeated charging and discharging.

Electrical double-layer capacitors according to the invention are well-suited for use in a broad range of applications, including memory backup power supplies for electronic equipment such as personal computers and wireless terminals, uninterruptible power supplies for computers and other equipment, in transport devices such as electric cars and hybrid cars, together with solar cells as energy storage systems for solar power generation, and in combination with batteries as load-leveling power supplies.

## EXAMPLES

The following synthesis examples, examples of the invention and comparative examples are provided to illustrate the invention, and are not intended to limit the scope thereof.

Synthesis Example 1

A reactor equipped with a stirrer, a thermometer and a condenser was charged with 64.34 parts by weight of preheated and dehydrated polycaprolactone diol ( Praccel 220N, made by Daicel Chemical Industries, Ltd.) and 28.57 parts by weight of 4,4'-diphenylmethane diisocyanate. The reactor contents were stirred and mixed for 2 hours at 120°C under a stream of nitrogen, following which 7.09 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate peak was confirmed to have disappeared from the infrared red absorption spectrum, heating was stopped, yielding a solid polyurethane resin.

The resulting polyurethane resin had a weight-average molecular weight (Mw) of $1.71 \times 10^5$. Eight parts by weight of the polyurethane resin was dissolved in 92 parts by weight of N-methyl-2-pyrrolidone to give a polyurethane resin solution.

Synthesis Example 2

A reactor equipped with a stirrer, a thermometer and a condensing tube was charged with 90.30 parts by weight of a preheated and dehydrated polyethylene glycol 6000 (PEG 6000-S, made by Sanyo Chemical Industries, Ltd.) and 7.84 parts by weight of 4,4'-diphenylmethane diisocyanate. The reactor contents were stirred and mixed for 2 hours at 120°C under a stream of nitrogen, following which 1.86 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate peak was confirmed to have disappeared from the infrared red absorption spectrum, heating was stopped, yielding a solid polyurethane resin.

The resulting polyurethane resin had a weight-average molecular weight (Mw) of $1.05 \times 10^5$. Eight parts by weight of the polyurethane resin was dissolved in 92 parts by weight of N-methyl-2-pyrrolidone to give a polyurethane resin solution.

Synthesis Example 3

A reactor equipped with a stirrer, a thermometer and a condenser was charged with 61.88 parts by weight of a preheated and dehydrated ethylene oxide-propylene oxide copolymer (Unisafe DC-1800, made by NOF Corporation) and 31.25 parts by weight of 4,4'-diphenylmethane diisocyanate. The reactor contents were stirred and mixed for 2 hours at 120°C under a stream of nitrogen, following which 6.87 parts by weight of 1,4-butanediol was added to the mixture and the reaction was similarly effected at 120°C under a stream of nitrogen. When the reaction reached the point where the reaction product became rubbery, it was stopped. The reaction product was then removed from the reactor and heated at 100°C for 12 hours. Once the isocyanate peak was confirmed to have disappeared from the infrared red absorption spectrum, heating was stopped, yielding a solid polyurethane resin.

The resulting polyurethane resin had a weight-average molecular weight (Mw) of $5.32 \times 10^4$. Eight parts by weight of the polyurethane resin was dissolved in 92 parts by weight of N-methyl-2-pyrrolidone to give a polyurethane resin solution.

Measurement of Glass Transition Temperature:

The glass transition temperatures of the polyurethane resins prepared in Synthesis Examples 1 to 3 and of polyvinylidene fluoride (PVDF) were measured using a differential scanning calorimeter manufactured by MAC Science Co., Ltd. Measurement was carried out while cooling the furnace with liquid nitrogen. The rate of temperature rise during measurement was 5°C per minute from an initial temperature of -100°C. The polyurethane resin prepared in Synthesis Example 1 had a glass transition temperature of - 39.5°C, the polyurethane resin prepared in Synthesis Example 2 had a glass transition temperature of 68.3°C, the polyurethane resin prepared in Synthesis Example 3 had a glass transition temperature of -36.2°C, and the polyvinylidene fluoride had a glass transition temperature of -40°C. The properties of these resins are shown in Table 1 below.

Example 1

The polyurethane resin solution prepared in Synthesis Example 1 was coated with a doctor blade so as to give a film thickness when dry of 30 μm, then dried under reduced pressure at 120°C for 2 hours to form a polyurethane resin film.

The resulting polyurethane resin film was immersed for 24 hours at 20°C in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio, thereby forming a gel electrolyte film.

Measurement of Swelling Ratio:

The weight of a 3 × 3 cm piece of the polyurethane resin film was measured, following which the polyurethane resin film was immersed in the electrolyte solution at 20°C for 24 hours. The polyurethane resin film was then taken out of the electrolyte solution and placed between sheets of filter paper to remove solution adhering to the film surface. The polyurethane resin film swollen with the electrolyte solution it had absorbed (which swollen film serves in the present context as an ion-conductive composition or a gel electrolyte film) was then weighed. These results were inserted in the following formula to calculate the swelling ratio.

$$\text{swelling ratio (\%)} = \frac{\text{weight in grams of swollen thermoplastic resin after 24 hours immersion in electrolyte solution at 20°C (g)}}{\text{weight in grams of thermoplastic resin before immersion in electrolyte solution at 20°C (g)}} \times 100 .$$

The polyurethane resin film produced in Example 1 had a swelling ratio of 320%.

Measurement of Ionic Conductivity:

The resulting gel electrolyte film was placed between two sheets of copper and the ionic conductivities at 25°C and -10°C were measured by the AC impedance method. The ionic conductivity at 25°C ($\sigma 1$) was $3.9 \times 10^{-3}$ $Scm^{-1}$, and the ionic conductivity at -10° C ($\sigma 2$) was $7.5 \times 10^{-4}$ $Scm^{-1}$. The ratio $\sigma 1/\sigma 2$ was 5.2.

<u>Comparative Example 1</u>

The polyurethane resin solution prepared in Synthesis Example 2 was coated with a doctor blade so as to give a film thickness when dry of 30 μm, then dried under reduced pressure at 120°C for 2 hours to form a polyurethane resin film.

The resulting polyurethane resin film was immersed for 24 hours at 20°C in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio, thereby forming a gel electrolyte film.

The swelling ratio of the polyurethane resin film, determined in the same way as for the polyurethane resin film produced in Example 1, of 1200%. The ionic conductivities of the gel electrolyte film, measured in the same way as for the gel electrolyte film in Example 1, were $5.0 \times 10^{-3}$ $Scm^{-1}$ at 25°C ($\sigma 1$) and $2.2 \times 10^{-4}$ $Scm^{-1}$ at -10° C ($\sigma 2$). Hence, the ratio $\sigma 1/\sigma 2$ was 22.7.

<u>Example 2</u>

The polyurethane resin solution prepared in Synthesis Example 3 was coated with a doctor blade so as to give a film thickness when dry of 30 μm, then dried under reduced pressure at 120°C for 2 hours to form a polyurethane resin film.

The resulting polyurethane resin film was immersed for 24 hours at 20°C in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio, thereby forming a gel electrolyte film.

The swelling ratio of the polyurethane resin film, determined in the same way as for the polyurethane resin film produced in Example 1, of 270%. The ionic conductivities of the gel electrolyte film, measured in the same way as for the gel electrolyte film in Example 1, were $2.7 \times 10^{-3}$ $Scm^{-1}$ at 25°C ($\sigma 1$) and $4.7 \times 10^{-4}$ $Scm^{-1}$ at -10°C ($\sigma 2$). Hence, the ratio $\sigma 1/\sigma 2$ was 5.8.

Comparative Example 2

A solution prepared by dissolving 10 parts by weight of polyvinylidene fluoride in 90 parts by weight of N-methyl-2-pyrrolidone was coated with a doctor blade so as to give a film thickness when dry of 30 μm, then dried under reduced pressure at 120°C for 2 hours to form a polyvinylidene fluoride resin film.

The resulting polyvinylidene fluoride resin film was immersed for 24 hours at 20°C in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio, thereby forming a gel electrolyte film.

The swelling ratio of the polyurethane resin film, determined in the same way as for the polyurethane resin film produced in Example 1, was 125%. The ionic conductivities of the gel electrolyte film, measured in the same way as for the gel electrolyte film in Example 1, were $4.8 \times 10^{-5}$ $Scm^{-1}$ at 25°C (σ1) and $3.0 \times 10^{-6}$ $Scm^{-1}$ at -10°C (σ2). Hence, the ratio σ1/σ2 was 16.0.

Table 1

| | | Tg (°C) | Swelling ratio (%) | Ionic conductivity at 25° C (σ1) (S/cm) | Ionic conductivity at -10° C (σ2) (S/cm) | σ1/σ2 |
|---|---|---|---|---|---|---|
| Syn. Ex. 1 | Polycapro lactone PU | -39.5 | 320 | $3.9 \times 10^{-3}$ | $7.5 \times 10^{-4}$ | 5.2 |
| Syn.Ex.2 | PEG6000 PU | 68.3 | 1200 | $5.0 \times 10^{-3}$ | $2.2 \times 10^{-4}$ | 22.7 |
| Syn.Ex.3 | EO/PO PU | -36.2 | 270 | $2.7 \times 10^{-3}$ | $4.7 \times 10^{-4}$ | 5.8 |
| | PVDF | -40.0 | 125 | $4.8 \times 10^{-5}$ | $3.0 \times 10^{-6}$ | 16.0 |

Example 3

Secondary Cell (1)

Fabrication of Positive Electrode:

Ninety parts by weight of $LiCoO_2$ as the positive electrode active material, 6 parts by weight of Ketjenblack as the conductive material, 50 parts by weight of the polyurethane resin solution prepared in Synthesis Example 1, and 10 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 75 parts by weight of the polyurethane resin solution prepared in Synthesis Example 1, and 20 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio. The separator was placed between the positive and negative electrodes fabricated above, following which the resulting cell assembly was filled with electrolyte solution, giving a coin-type secondary cell like that shown in FIG. 4.

The coin-type secondary cell of Example 3 was subjected to a 50-cycle charge/discharge test conducted at a constant current density of 0.5 $mA/cm^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Example 4

Secondary Cell (2)

Aside from using the gel electrolyte film fabricated in Example 1 as the separator, a coin-type secondary cell like that shown in FIG. 4 was produced in the same manner as in Example 3.

The coin-type secondary cell of Example 4 was subjected to a 50-cycle charge/discharge test conducted at a constant current density of 0.5 mA/$cm^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Example 5

Secondary Cell (3)

A coin-type secondary cell was produced as in Example 3 using the positive electrode fabricated in Example 3 and using metallic lithium as the negative electrode.

The discharge load characteristics and low-temperature characteristics of the resulting coin-type secondary cell of Example 5 were evaluated as described below.

Discharge Load Characteristics:

The upper limit voltage during charging was set at 4.2 V, the final voltage during discharging was set at 3 V, the current during charging was set at 0.5 mA/$cm^2$ (equivalent to 0.2 C), and discharging was carried out at current levels of 0.5 mA/$cm^2$ (0.2 C) and 2.5 mA/$cm^2$ (1.0 C). The two discharge curves shown in FIG. 5 were obtained for the coin-type secondary cell produced in Example 5. These results indicate that this secondary cell had a discharge capacity when discharged at 2.5 mA/$cm^2$ (1.0 C) which was 96.4% the discharge capacity when discharged at 0.5 mA/$cm^2$ (0.2 C).

Low-Temperature Characteristics:

The coin-type secondary cell of Example 5 was subjected to charging and discharging at temperatures of 25°C and -10°C and a constant current density of 0.5 mA/$cm^2$, in which the upper limit voltage during charging was set at 4.2 V and discharge was carried out to a final voltage of 3 V. The two discharge curves shown in FIG. 6 were obtained. The results indicate that this secondary cell had a discharge capacity when discharged at -10°C which was 93.4% the discharge capacity when discharged at 25°C.

Example 6

Secondary Cell (4)

Fabrication of Positive Electrode:

Ninety parts by weight of $LiCoO_2$ as the positive electrode active material, 6 parts by weight of Ketjenblack as the conductive material, 25 parts by weight of the polyurethane resin solution prepared in Synthesis Example 1, 20 parts by weight of a solution of 10 parts by weight of polyvinylidene fluoride in 90 parts by weight of N-methyl-2-pyrrolidone, and 15 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 37.5 parts by weight of the polyurethane resin solution prepared in Synthesis Example 1, 30 parts by weight of a solution of 10 parts by weight of polyvinylidene fluoride in 90 parts by weight of N-methyl-2-pyrrolidone, and 28 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio. The separator was placed between the positive and negative electrodes fabricated above, following which the resulting cell assembly was filled with electrolyte solution, giving a coin-type secondary cell like that shown in FIG. 4.

The coin-type secondary cell of Example 6 was subjected to a 50-cycle charge/discharge test conducted at a constant current density of 0.5 mA/cm$^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Example 7

Secondary Cell (5)

Aside from using the gel electrolyte film fabricated in Example 1 as the separator, a coin-type secondary cell like that shown in FIG. 4 was produced in the same manner as in Example 6.

The coin-type secondary cell of Example 7 was subjected to a 50-cycle charge/discharge test conducted at a constant current density of 0.5 mA/cm$^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Example 8

Secondary Cell (6)

Fabrication of Positive Electrode:

Ninety-two parts by weight of $LiCoO_2$ as the positive electrode active material, 4 parts by weight of Ketjenblack as the conductive material, 2.5 parts by weight of the polyurethane resin solution prepared in Synthesis Example 1, 38 parts by weight of a solution of 10 parts by weight of polyvinylidene fluoride in 90 parts by weight of N-methyl-2-pyrrolidone, and 18 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 3.75 parts by weight of the polyurethane resin solution prepared in Synthesis Example 1, 57 parts by weight of a solution of 10 parts by weight of polyvinylidene fluoride in 90 parts by weight of N-methyl-2-pyrrolidone, and 30 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio. The separator was placed between the positive and negative electrodes fabricated above, following which the resulting cell assembly was filled with electrolyte solution, giving a coin-type secondary cell like that shown in FIG. 4.

The coin-type secondary cell of Example 8 was subjected to a 50-cycle charge/discharge test conducted at a constant current density of 0.5 mA/cm$^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Example 9

Secondary Cell (7)

Aside from using the gel electrolyte film fabricated in Example 1 as the separator, a coin-type secondary cell like that shown in FIG. 4 was produced in the same manner as in Example 8.

The coin-type secondary cell of Example 9 was subjected to a 50-cycle charge/discharge test conducted at a constant current density of 0.5 mA/cm$^2$ in which the upper limit voltage during charging was set at 4.2 V and discharge was carried out to a final voltage of 3 V. Following completion of the charge/discharge test, the coin-type secondary cell showed no loss of binder composition from either the positive or negative electrode, and no separation of the active material layers from the current collectors.

Comparative Example 3

Secondary Cell (8)

Fabrication of Positive Electrode:

Ninety parts by weight of $LiCoO_2$ as the positive electrode active material, 6 parts by weight of Ketjenblack as the conductive material, 50 parts by weight of the polyurethane resin solution prepared in Synthesis Example 2, and 10 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 75 parts by weight of the polyurethane resin solution prepared in Synthesis Example 2, and 20 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, dimethyl carbonate and ethyl methyl carbonate in a 1:1:1 volumetric ratio. The separator was placed between the positive and negative electrodes fabricated above, following which the resulting cell assembly was filled with the electrolyte solution, giving a coin-type secondary cell like that shown in FIG. 4.

The coin-type secondary cell of Comparative Example 3 was subjected to a 50-cycle charge/discharge test conducted at a constant current density of 0.5 mA/cm$^2$ in which the upper limit voltage during charging was set at 4.2 V and discharge was carried out to a final voltage of 3 V. Following completion of the charge/discharge test, the coin-type secondary cell exhibited the loss of a large amount of binder composition from the positive and negative electrodes and the separation of a large amount of the active material layers from the current collectors.

Example 10

Secondary Cell (9)

Positive and negative electrodes were fabricated in the same way as in Example 9. A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, diethyl carbonate, propylene carbonate and vinylene carbonate in a 35:50:13:2 volumetric ratio. The separator was placed between the positive and negative electrodes fabricated above, following which the resulting cell assembly was filled with the electrolyte solution, giving a coin-type secondary cell like that shown in FIG. 4.

The coin-type secondary cell of Example 10 was subjected to a charge/discharge test conducted at a constant current density of 0.5 mA/cm$^2$ in which the upper limit voltage during charging was set at 4.2 V and discharge was carried out to a final voltage of 3 V. In this case, discharge was carried out at both 25°C and -10°C. The ratio of the discharge capacity when discharged at -10°C to the discharge capacity when discharged at 25°C was 87.6%.

Example 11

Secondary Cell (10)

Fabrication of Positive Electrode:

Ninety-two parts by weight of $LiCoO_2$ as the positive electrode active material, 4 parts by weight of Ketjenblack as the conductive material, 0.5 part by weight of the polyurethane resin solution prepared in Synthesis Example 1, 39.6 parts by weight of a solution of 10 parts by weight of polyvinylidene fluoride in 90 parts by weight of N-methyl-2-pyrrolidone, and 19 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 0.75 part by weight of the polyurethane resin solution prepared in Synthesis Example 1, 59.4 parts by weight of a solution of 10 parts by weight of polyvinylidene fluoride in 90 parts by weight of N-methyl-2-pyrrolidone, and 30 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, diethyl carbonate, propylene carbonate and vinylene carbonate in a 35:50:13:2 volumetric ratio. The separator was placed between the positive and negative electrodes fabricated above, following which the resulting cell assembly was filled with the electrolyte solution, giving a coin-type secondary cell like that shown in FIG. 4.

The coin-type secondary cell of Example 11 was subjected to a charge/discharge test conducted at a constant current density of 0.5 $mA/cm^2$ in which the upper limit voltage during charging was set at 4.2 V and discharge was carried out to a final voltage of 2.75 V. In this case, discharge was carried out at both 25°C and -10°C. The ratio of the discharge capacity when discharged at -10°C to the discharge capacity when discharged at 25°C was 75.2%.

Example 12

Secondary Cell (11)

Fabrication of Positive Electrode:

Ninety-two parts by weight of $LiCoO_2$ as the positive electrode active material, 4 parts by weight of Ketjenblack as the conductive material, 2.5 part by weight of the polyurethane resin solution prepared in Synthesis Example 3, 38 parts by weight of a solution of 10 parts by weight of polyvinylidene fluoride in 90 parts by weight of N-methyl-2-pyrrolidone, and 18 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode.

Fabrication of Negative Electrode:

Ninety-four parts by weight of mesocarbon microbeads (MCMB6-28, produced by Osaka Gas Chemicals Co., Ltd.) as the negative electrode active material, 3.75 parts by weight of the polyurethane resin solution prepared in Synthesis Example 3, 57 parts by weight of a solution of 10 parts by weight of polyvinylidene fluoride in 90 parts by weight of N-methyl-2-pyrrolidone, and 30 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, diethyl carbonate, propylene carbonate and vinylene carbonate in a 35:50:13:2 volumetric ratio. The separator was placed between the positive and negative electrodes fabricated above, following which the resulting cell assembly was filled with the electrolyte solution, giving a coin-type secondary cell like that shown in FIG. 4.

The coin-type secondary cell of Example 12 was subjected to a charge/discharge test conducted at a constant

current density of 0.5 mA/$cm^2$ in which the upper limit voltage during charging was set at 4.2 V and discharge was carried out to a final voltage of 2.75 V. In this case, discharge was carried out at both 25°C and -10°C. The ratio of the discharge capacity when discharged at -10°C to the discharge capacity when discharged at 25°C was 81.3%.

Comparative Example 4

Secondary Cell (12)

Fabrication of Positive Electrode:

Ninety-two parts by weight of $LiCoO_2$ as the positive electrode active material, 4 parts by weight of Ketjenblack as the conductive material, 40 parts by weight of a solution of 10 parts by weight of polyvinylidene fluoride in 90 parts by weight of N-methyl-2-pyrrolidone, and 18 parts by weight of N-methyl-2-pyrrolidone were stirred and mixed to give a paste-like positive electrode binder composition. The composition was coated onto aluminum foil with a doctor blade so as to give a film thickness when dry of 100 μm, then dried at 80°C for 2 hours to form a positive electrode. Fabrication of Negative Electrode:

Ninety-four parts by weight of mesocarbon microbeads (MCMB6-28, produced by Osaka Gas Chemicals Co., Ltd.) as the negative electrode active material, 60 parts by weight of a solution of 10 parts by weight of polyvinylidene fluoride in 90 parts by weight of N-methyl-2-pyrrolidone, and 30 parts by weight of N-methyl-2-pyrrolidone were stirred and mixed to give a paste-like negative electrode binder composition. The composition was coated onto copper foil with a doctor blade so as to give a film thickness when dry of 100 μm, then dried at 80°C for 2 hours to form a negative electrode.

A separator was formed by immersing a separator base (a film having a three-layer PP/PE/PP structure) in an electrolyte solution prepared by dissolving 1.35 moles of $LiPF_6$ as the supporting salt in 1 liter of a mixed solvent composed of ethylene carbonate, diethyl carbonate, propylene carbonate and vinylene carbonate in a 35:50:13:2 volumetric ratio. The separator was placed between the positive and negative electrodes fabricated above, following which the resulting cell assembly was filled with the electrolyte solution, giving a coin-type secondary cell like that shown in FIG. 4.

The coin-type secondary cell of Comparative Example 4 was subjected to a charge/discharge test conducted at a constant current density of 0.5 mA/$cm^2$ in which the upper limit voltage during charging was set at 4.2 V and discharge was carried out to a final voltage of 2.75 V. In this case, discharge was carried out at both 25°C and -10°C. The ratio of the discharge capacity when discharged at -10°C to the discharge capacity when discharged at 25°C was 60.8%.

The composition and properties of the various secondary cells produced in the above examples are summarized in Table 2 below.

Table 2

| | Positive electrode binder | Separator | Negative electrode binder | Electrolyte | Loss of binder composition and electrode separation | Low temperature capability (%) | Rate capability (%) |
|---|---|---|---|---|---|---|---|
| Example 3 (secondary cell 1) | Polycapro lactone PU | PP/PE/PP | Polycapro lactone PU | EC/EMC/DMC (1: 1:1) | none | | |
| Example 4 (secondary cell 2) | Polycapro lactone PU | lactone PU electrolyte film | Polycapro lactone PU | EC/EMC/DMC (1: 1:1) | none | | |
| Example 5 (secondary cell 3) | Polycapro lactone PU | PP/PE/PP | None (lithium negative electrode) | EC/EMC/DMC (1: 1:1) | none | 93.4 | 96.4 |
| Example 6 (secondary cell 4) | lactone PU (50 wt%) + PVDF (50 wt%) | PP/PE/PP | Polycapro lactone PU (50 wt%) + PVDF (50 wt%) | EC/EMC/DMC (1: 1:1) | none | | |
| Example 7 (secondary cell 5) | Polycapro lactone PU (50 wt%) + PVDF (50 wt%) | Polycapro lactone PU electrolyte film | Polycapro lactone PU (50 wt%) + PVDF (50 wt%) | EC/EMC/DMC (1: 1:1) | none | | |
| Example 8 (secondary cell 6) | Polycapro lactone PU (5 wt%) + PVDF (95 wt%) | PP/PE/PP | Polycapro lactone PU (5 wt%) + PVDF (95 wt%) | EC/EMC/DMC (1: 1:1) | none | | |
| Example 9 (secondary cell 7) | Polycapro lactone PU (5 wt%) + PVDF (95 wt%) | Polycapro lactone PU electrolyte film | Polycapro lactone PU (5 wt%) + PVDF (95 wt%) | EC/EMC/DMC (1: 1:1) | none | | |
| Comparative Example 3 (secondary cell 8) | PEG6000 PU | PP/PE/PP | PEG6000 PU | EC/EMC/DMC (1: 1:1) | yes | | |
| Example 10 (secondary cell 9) | Polycapro lactone PU (5 wt%) + PVDF (95 wt%) | PP/PE/PP | Polycapro lactone PU (5 wt%) + PVDF (95 wt%) | EC/DEC/PC/VC (35:50:13:2) | none | 87.6 | |
| Example 11 (secondary cell 10) | lactone PU (1 wt%) + PVDF (99 wt%) | PP/PE/PP | Polycapro lactone PU (1 wt%) + PVDF (99 wt%) | EC/DEC/PC/VC (35:50:13:2) | none | 75.2 | |

(continued)

| | Positive electrode binder | Separator | Negative electrode binder | Electrolyte | Loss of binder composition and electrode separation | Low temperature capability (%) | Rate capability (%) |
|---|---|---|---|---|---|---|---|
| Example 12 (secondary cell 11) | EO/PO-PU (5 wt%) + PVdF (95 wt%) | PP/PE/PP | | EC/DEC/PC/VC (35:50:13:2) | none | 81.3 | |
| Comparative Example 4 (secondary cell 12) | PVDF | PP/PE/PP | PVDF | EC/DEC/PC/VC (35:50:13:2) | none | 60.8 | |
| Low-temperature capability (%): (discharge capacity at -10°C)/(discharge capacity at 25°C) × 100<br>Rate capability (%): (Discharge capacity at 1.0 C)/(discharge capacity at 0.2 C) × 100 | | | | | | | |

Example 13

Electrical Double-Layer Capacitor (1)

Fabrication of Polarizable Electrodes:

Eighty-five parts by weight of activated carbon (MSP15, produced by Kansai Netsukagaku KK), 10 parts by weight of acetylene black, 62.5 parts by weight of the polyurethane resin solution prepared in Synthesis Example 1, and 155 parts by weight of N-methyl-2-pyrrolidone were stirred and mixed to give a paste-like polarizable electrode binder composition. The composition was coated onto aluminum foil with a doctor blade so as to give a film thickness when dry of 200 μm, then dried at 80°C for 2 hours to form polarizable electrodes.

A separator was formed by immersing a separator base (polytetrafluoroethylene) in an electrolyte solution prepared by dissolving 1 mole of tetraethylammonium tetrafluoroborate as the supporting salt in 1 liter of propylene carbonate. The separator was placed between a pair of the polarizable electrodes fabricated above, following which the resulting capacitor assembly was filled with the electrolyte solution, giving a coin-type electrical double-layer capacitor like that shown in FIG. 4.

The coin-type electrical double-layer capacitor of Example 13 was subjected to a 50-cycle charge/discharge test conducted at a constant current density of 1.5 $mA/cm^2$ in which the upper limit voltage during charging was set at 2.5 V and discharge was carried out to a final voltage of 0 V. Following completion of the charge/discharge test, the coin-type electrical double-layer capacitor showed no loss of binder composition from either of the polarizable electrodes, and no separation of the activated carbon layer from the current collectors.

Example 14

Electrical Double-Layer Capacitor (2)

Aside from using the gel electrolyte film fabricated in Example 1 as the separator, a coin-type electrical double-layer capacitor like that shown in FIG. 4 was produced in the same manner as in Example 13.

The coin-type electrical double-layer capacitor of Example 14 was subjected to a 50-cycle charge/discharge test conducted at a constant current density of 1.5 $mA/cm^2$ in which the upper limit voltage during charging was set at 2.5 V and discharge was carried out to a final voltage of 0 V. Following completion of the charge/discharge test, the coin-type electrical double-layer capacitor showed no loss of binder composition from the polarizable electrodes, and no separation of the activated carbon layer from the current collectors.

Comparative Example 5

Electrical Double-Layer Capacitor (3)

Fabrication of Polarizable Electrodes:

Eighty-five parts by weight of activated carbon (MSP15, produced by Kansai Netsukagaku KK), 10 parts by weight of acetylene black, 62.5 parts by weight of the polyurethane resin solution prepared in Synthesis Example 2, and 155 parts by weight of N-methyl-2-pyrrolidone were stirred and mixed to give a paste-like polarizable electrode binder composition. The composition was coated onto aluminum foil with a doctor blade so as to give a film thickness when dry of 200 μm, then dried at 80°C for 2 hours to form polarizable electrodes.

A separator was formed by immersing a separator base (polytetrafluoroethylene) in an electrolyte solution prepared by dissolving 1 mole of tetraethylammonium tetrafluoroborate as the supporting salt in 1 liter of propylene carbonate. The separator was placed between a pair of the polarizable electrodes fabricated above, following which the resulting capacitor assembly was filled with the electrolyte solution, giving a coin-type electrical double-layer capacitor like that shown in FIG. 4.

The coin-type electrical double-layer capacitor of Comparative Example 5 was subjected to a 50-cycle charge/discharge test conducted at a constant current density of 1.5 $mA/cm^2$ in which the upper limit voltage during charging was set at 2.5 V and discharge was carried out to a final voltage of 0 V. Following completion of the charge/discharge test, the coin-type electrical double-layer capacitor exhibited the loss of a large amount of binder composition from the polarizable electrodes, and the separation of a large amount of the activated carbon layers from the current collectors.

Example 15

Electrical Double-Layer Capacitor (4)

Fabrication of Activated Carbon Electrodes:

Ninety parts by weight of activated carbon (MSP15, produced by Kansai Netsukagaku KK), 5 parts by weight of acetylene black, 3.125 parts by weight of the polyurethane resin solution prepared in Synthesis Example 1, 47.5 parts by weight of a solution of 10 parts by weight of polyvinylidene fluoride in 90 parts by weight of N-methyl-2-pyrrolidone, and 155 parts by weight of N-methyl-2-pyrrolidone were stirred and mixed to give a paste-like polarizable electrode binder composition. The composition was coated onto aluminum foil with a doctor blade so as to give a film thickness when dry of 200 μm, then dried at 80°C for 2 hours to form a polarizable electrode.

A separator was formed by immersing a separator base (polytetrafluoroethylene) in an electrolyte solution prepared by dissolving 1 mole of tetraethylammonium tetrafluoroborate as the supporting salt in 1 liter of propylene carbonate. The separator was placed between a pair of the polarizable electrodes fabricated above, following which the resulting capacitor assembly was filled with the electrolyte solution, giving a coin-type electrical double-layer capacitor like that shown in FIG. 4.

The coin-type electrical double-layer capacitor of Example 15 was subjected to a charge/discharge test conducted at a constant current density of 1.5 $mA/cm^2$ in which the upper limit voltage during charging was set at 2.5 V and discharge was carried out to a final voltage of 0 V. In this case, discharge was carried out at both 25°C and -10°C. The ratio of the discharge energy when discharged at -10°C to the discharge energy when discharged at 25°C was 80.2%.

Comparative Example 6

Electrical Double-Layer Capacitor (5)

Fabrication of Activated Carbon Electrodes:

Ninety parts by weight of activated carbon (MSP15, produced by Kansai Netsukagaku KK), 5 parts by weight of acetylene black, 50 parts by weight of a solution of 10 parts by weight of polyvinylidene fluoride in 90 parts by weight of N-methyl-2-pyrrolidone, and 155 parts by weight of N-methyl-2-pyrrolidone were stirred and mixed to give a paste-like polarizable electrode binder composition. The composition was coated onto aluminum foil with a doctor blade so as to give a film thickness when dry of 200 μm, then dried at 80°C for 2 hours to form polarizable electrodes.

A separator was formed by immersing a separator base (polytetrafluoroethylene) in an electrolyte solution prepared by dissolving 1 mole of tetraethylammonium tetrafluoroborate as the supporting salt in 1 liter of propylene carbonate. The separator was placed between a pair of the polarizable electrodes fabricated above, following which the resulting capacitor assembly was filled with the electrolyte solution, giving a coin-type electrical double-layer capacitor like that shown in FIG. 4.

The coin-type electrical double-layer capacitor of Comparative Example 6 was subjected to a charge/discharge test conducted at a constant current density of 1.5 $mA/cm^2$ in which the upper limit voltage during charging was set at 2.5 V and discharge was carried out to a final voltage of 0 V. In this case, discharge was carried out at both 25°C and -10°C. The ratio of the discharge energy when discharged at -10°C to the discharge energy when discharged at 25°C was 71.4%.

The composition and properties of the various electrical double-layer capacitors produced in the above examples are summarized in Table 3 below.

Table 3

| | Positive electrode binder | Separator | Negative electrode binder | Electrolyte | Loss of binder composition and electrode separation | Low temperature capability (%) |
|---|---|---|---|---|---|---|
| Example 13 (electrical double-layer capacitor 1) | Polycapro lactone PU | PTFE | Polycapro lactone PU | PC | none | |

(continued)

| | Positive electrode binder | Separator | Negative electrode binder | Electrolyte | Loss of binder composition and electrode separation | Low temperature capability (%) |
|---|---|---|---|---|---|---|
| Example 14 (electrical double-layer capacitor 2) | Polycapro lactone PU | Polycapro lactone PU electrolyte film | Polycapro lactone PU | | none | |
| Example 15 (electrical double-layer capacitor 3) | Polycapro lactone PU (5 wt%) + PVDF (95 wt%) | PTFE | Polycapro lactone PU (5 wt%) + PVDF (95 wt%) | PC | none | 80.2 |
| Comparative Example 5 (electrical double-layer capacitor 4) | PEG6000 PU | PTFE | PEG6000 PU | PC | yes | |
| Comparative Example 6 (electrical double-layer capacitor 5) | PVDF | PTFE | PVDF | PC | none | 71.4 |
| Low-temperature capability (%): (discharge energy at -10°C) /(discharge energy at 25°C) × 100 | | | | | | |

As demonstrated in the foregoing examples, the invention provides thermoplastic resin-containing electrode binder compositions which have a number of excellent properties. For example, the resins within the compositions bond well with active materials or activated carbon, making it possible to use less binder in the composition; the compositions have a high ionic conductivity when swollen with an electrolyte solution, and are thus able to lower the internal resistance in non-aqueous electrolyte batteries and electrical double-layer capacitors; and the compositions adhere well to the surface of current collectors, enabling the formation of an active material (activated carbon) layer of sufficient flexibility.

The invention also provides ion-conductive compositions which are well-suited for use as separators, both because they have a high ionic conductivity at ambient and low temperatures and can thus lower the internal resistance within a battery or capacitor, and also because they have a high heat stability and excellent shapeability and can be heat-treated at elevated temperatures.

Accordingly, the above electrode binder composition and/or ion-conductive compositions can be used to manufacture high-performance non-aqueous electrolyte batteries and electrical double-layer capacitors which do not suffer any loss of binder composition from the electrodes, separation of the active material (activated carbon) layers from current collectors, or cracking in assembly operations and during repeated charging and discharging, and which have excellent discharge load characteristics.

## Claims

1. A gel electrolyte comprising an electrolyte solution composed of an ion-conductive salt and a solvent in which the ion-conductive salt is soluble, said solvent being one or a mixture of two or more of chain ethers, heterocyclic ethers, butyrolactones, amide solvents, carbonate solvents and imidazolidinone solvents, in combination with a thermoplastic polyurethane resin prepared by reacting a polyol compound having a number-average molecular weight of 1000-5000 with a polyisocyanate compound and a chain extender, said resin having a swelling ratio, as determined from the equation

$$\text{swelling ratio } (\%) = \frac{\text{weight in grams of swollen thermoplastic resin after 24 hours immersion in said electrolyte solution at } 20^\circ\text{C (g)}}{\text{weight in grams of thermoplastic resin before immersion in electrolyte solution at } 20^\circ\text{C (g)}} \times 100 \quad ,$$

within a range of 150 to 800%; and wherein the ionic conductivities of the gel electrolyte in S/cm as measured by the AC impedance method at 25°C ("σ1") and or -10°C ("σ2") are such that σ1/σ2 is in the range 1-10.

**2.** The gel electrolyte of claim 1 in which the thermoplastic resin contains units of general formula (1) below

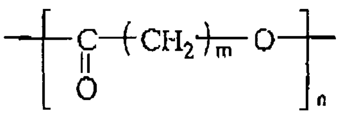

(1)

wherein the letter m is a number from 3 to 5, and the letter n is 5 or more.

**3.** The gel electrolyte of claim 1 or claim 2 wherein the swelling ratio is from 320-800%.

**4.** The gel electrolyte of claim 3, wherein the polyol compound is a polyester polyol, a polyester polyether polyol, a polyester polycarbonate polyol, a polycaprolactone polyol, or a mixture thereof.

**5.** The gel electrolyte according to any preceding claim which is prepared by shaping the thermoplastic resin then immersing the shaped resin in the electrolyte solution to effect swelling.

**6.** A method of producing a gel electrolyte having the steps of (a) preparing a thermoplastic polyurethane resin by reacting a polyol compound having a number-average molecular weight of 1000-5000 with a polyisocyanate and a chain-extender; (b) shaping said thermoplastic resin and (c) immersing the shaped resin in an electrolyte solution to effect swelling;
wherein the electrolyte solution is composed of an ion-conductive salt and a solvent in which the salt is soluble, the solvent being one or more compounds selected from chain ethers, heterocyclic ethers, butyrolactones, amide solvents, carbonate solvents and imidazolidinone solvents;
wherein the swelling ratio of the resin in the solution as determined from the equation:

swelling ratio = [ (weight in grams of swollen resin after 24 hours immersion in the solution at $20^0$C)/(weight in grams of the resin prior to immersion) ] x 100%

is in the range 150-800%; and
wherein the ionic conductivities of the gel electrolyte in S/cm as measured by the AC impedance method at 25°C (σ1) and at -10°C(σ2) are such that the ratio σ1:σ2 is in the range 1-10:1.

**7.** The method of claim 6 in which the thermoplastic resin contains units of general formula (1) below

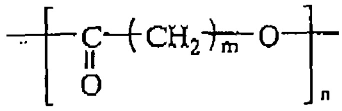

(1)

wherein the letter m is a number from 3 to 5, and the letter n is 5 or more.

8. The method of claim 6 or 7, wherein the swelling ratio is within the range 320 to 800%.

9. The method of claim 6, 7 or 8, wherein the polyol compound is a polyester polyol, a polyester polyether polyol, a polyester polycarbonate polyol, a polycaprolactone polyol, or a mixture thereof.

**Patentansprüche**

1. Gelelektrolyt, umfassend eine Elektrolytlösung, die aus einem ionenleitenden Salz und einem Lösungsmittel, in dem das ionenleitende Salz löslich ist, wobei das Lösungsmittel eines oder ein Gemisch zweier oder mehrerer aus offenkettigen Ethern, heterozyklischen Ethern, Butyrolactonen, Amidlösungsmitteln, Carbonatlösungsmitteln und Imidazolidinonlösungsmitteln ist, in Kombination mit einem thermoplastischen Polyurethanharz, das durch Umsetzen einer Polyolverbindung mit einem zahlenmittleren Molekulargewicht von 1000-5000 mit einer Polyisocyanatverbindung und einem Kettenverlängerer hergestellt ist, besteht, wobei das Harz ein Quellverhältnis, das anhand der folgenden Gleichung berechnet wird:

$$\text{Quellverhältnis (\%)} = \frac{\text{Gewicht in Gramm des gequollenen thermoplastischen Harzes nach 24 h Eintauchen in die Elektrolytlösung bei 20 °C (g)}}{\text{Gewicht in Gramm des thermoplastischen Harzes vor dem Eintauchen in die Elektrolytlösung bei 20 °C (g)}} \times 100$$

im Bereich von 150 bis 800 % aufweist; und worin die durch das Wechselstrom-Impedanzverfahren in S/cm gemessene Ionenleitfähigkeit des Gelelektrolyten bei 25 °C ("σ1") und bei -10 °C ("σ2") solche Werte annimmt, dass das Verhältnis σ1:σ2 im Bereich von 1-10 liegt.

2. Gelelektrolyt nach Anspruch 1, worin das thermoplastische Harz Einheiten der nachstehenden allgemeinen Formel (1) enthält:

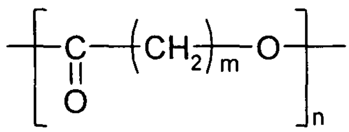

(1)

worin der Index m eine Zahl von 3 bis 5 ist und der Index $n \geq 5$ ist.

3. Gelelektrolyt nach Anspruch 1 oder Anspruch 2, worin das Quellverhältnis 320-800 % beträgt.

4. Gelelektrolyt nach Anspruch 3, worin die Polyolverbindung ein Polyesterpolyol, ein Polyesterpolyetherpolyol, ein Polyesterpolycarbonatpolyol, ein Polycaprolactonpolyol oder ein Gemisch daraus ist.

5. Gelelektrolyt nach einem der vorangegangenen Ansprüche, der durch Formen des thermoplastischen Harzes und Eintauchen des geformten Harzes in die Elektrolytlösung hergestellt wird, um Quellung hervorzurufen.

6. Verfahren zur Herstellung eines Gelelektrolyten, umfassend die folgenden Schritte: (a) Herstellen eines thermoplastischen Polyurethanharzes durch Umsetzen einer Polyolverbindung mit einem zahlenmittleren Molekulargewicht von 1000-5000 mit einem Polyisocyanat und einem Kettenverlängerer, (b) Formen des thermoplastischen Harzes und (c) Eintauchen des geformten Harzes in eine Elektrolytlösung, um Quellung hervorzurufen;
worin die Elektrolytlösung aus einem ionenleitenden Salz und einem Lösungsmittel besteht, in dem das ionenleitende Salz löslich ist, wobei das Lösungsmittel eine oder mehrere aus offenkettigen Ethern, heterozyklischen Ethern, Butyrolactonen, Amidlösungsmitteln, Carbonatlösungsmitteln und Imidazolidinonlösungsmitteln ausgewählte Verbindung(en) ist;
worin das Quellverhältnis des Harzes in der Lösung, das anhand der folgenden Gleichung berechnet wird:

Quellverhältnis = [(Gewicht in Gramm des gequollenen Harzes nach 24 h Eintauchen in die Lösung bei 20 °C)/(Gewicht in Gramm des Harzes vor dem Eintauchen)] x 100 %

im Bereich von 150-800 % liegt; und
worin die durch das Wechselstrom-Impedanzverfahren in S/cm gemessene Ionenleitfähigkeit des Gelelektrolyten bei 25 °C ("$\sigma 1$") und bei -10 °C ("$\sigma 2$") solche Werte annimmt, dass das Verhältnis $\sigma 1 : \sigma 2$ im Bereich von 1-10: 1 liegt.

7. Verfahren nach Anspruch 6, worin das thermoplastische Harz Einheiten der nachstehenden allgemeinen Formel (1) enthält:

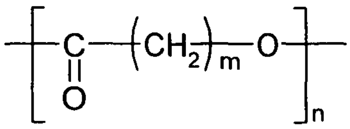
(1)

worin der Index m eine Zahl von 3 bis 5 ist und der Index n ≥ 5 ist.

8. Verfahren nach Anspruch 6 oder 7, worin das Quellverhältnis im Bereich von 320-800 % liegt.

9. Verfahren nach Anspruch 6, 7 oder 8, worin die Polyolverbindung ein Polyesterpolyol, ein Polyesterpolyetherpolyol, ein Polyesterpolycarbonatpolyol, ein Polycaprolactonpolyol oder ein Gemisch daraus ist.

**Revendications**

1. Electrolyte en gel comprenant une solution d'électrolyte composée d'un sel conducteur d'ions et d'un solvant dans lequel le sel conducteur d'ions est soluble, ledit solvant étant un ou un mélange de deux ou plusieurs d'éthers chaîne, éthers hétérocycliques, butyrolactones, solvants d'amide, solvants de carbonate et solvants d'imidazolidinone, en combinaison avec une résine de polyuréthanne thermoplastique préparée par réaction d'un composé de polyol ayant un poids moléculaire moyen en nombre de 1000-5000 avec un composé de polyisocyanate et un extenseur de chaîne, ladite résine ayant un rapport de gonflement déterminé à partir de l'équation

$$\text{Rapport de gonflement} = \frac{\text{Poids en grammes de la résine thermoplastique gonflée au bout de 24 heures d'immersion dans la solution de l'électrolyte à 20°C}}{\text{Poids en grammes de la résine thermoplastique avant immersion dans la solution de l'électrolyte à 20°C (g)}}$$

dans une gamme de 150 à 800%; et où les conductivités ioniques de l'électrolyte en gel en S/cm mesurées par la méthode d'impédance en CA à 25°C ("σ1") et à -10°C ("σ2") sont tels que σ1/σ2 soit dans la gamme de 1/10.

2. Electrolyte en gel de la revendication 1 dans lequel la résine thermoplastique contient des unités de la formule générale (1) ci-dessous

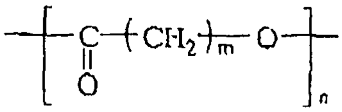

(1)

où la lettre m est un nombre de 3 à 5 et la lettre n est 5 ou plus.

3. Electrolyte en gel de la revendication 1 ou la revendication 2, où le rapport de gonflement est de 320-800%.

4. Electrolyte en gel de la revendication 3, où le composé de polyol est un polyester polyol, un polyester polyéther polyol, un polyester polycarbonate polyol, un polycaprolactone polyol ou un mélange.

5. Electrolyte en gel selon toute revendication précédente qui est préparé en configurant la résine thermoplastique puis en immergeant la résine formée dans la solution de l'électrolyte pour effectuer le gonflement.

6. Méthode de production d'un électrolyte en gel ayant les étapes de (a) préparer une résine de polyuréthanne thermoplastique par réaction d'un composé de polyol ayant un poids moléculaire moyen en nombre de 1000-5000 avec un polyisocyanate et un extenseur de chaîne, (b) configurer ladite résine thermoplastique et (c) immerger la résine en forme dans une solution d'électrolyte pour effectuer le gonflement;
où la solution de l'électrolyte se compose d'un sel conducteur d'ions et d'un solvant dans lequel le sel est soluble, le solvant étant un ou plusieurs composés sélectionnés parmi des éthers chaîne, des éthers hétérocycliques, des butyrolactones, des solvants d'amide, des solvants de carbonate et des solvants d'imidazolidone;
où le rapport de gonflement de la résine dans la solution déterminé à partir de l'équation:

rapport de gonflement = [(poids en grammes de la résine gonflée au bout de 24 heures d'immersion dans la solution à 20°C) / (poids en grammes de la résine avant immersion)] x 100%

est dans la gamme de 150-800%; et
où les conductivités ioniques de l'électrolyte en gel en S/cm mesurées par la méthode d'impédance en CA à 25°C (σ1) et à -10°C (σ2) sont telles que le rapport σ1:σ2 soit dans la gamme de 1-10:1.

7. Méthode de la revendication 6, dans laquelle la résine thermoplastique contient des unités de la formule générale (1) ci-dessous
où la lettre m est un nombre de 3 à 5 et la lettre n est 5 ou plus.

8. Méthode de la revendication 6 ou 7, où le rapport de gonflement est dans la gamme de 320 à 800%.

9. Méthode de la revendication 6, 7 ou 8, où le composé de polyol est un polyester polyol, un polyester polyéther polyol, un polyester polycarbonate polyol, un polycaprolactone polyol ou un mélange.

FIG.1

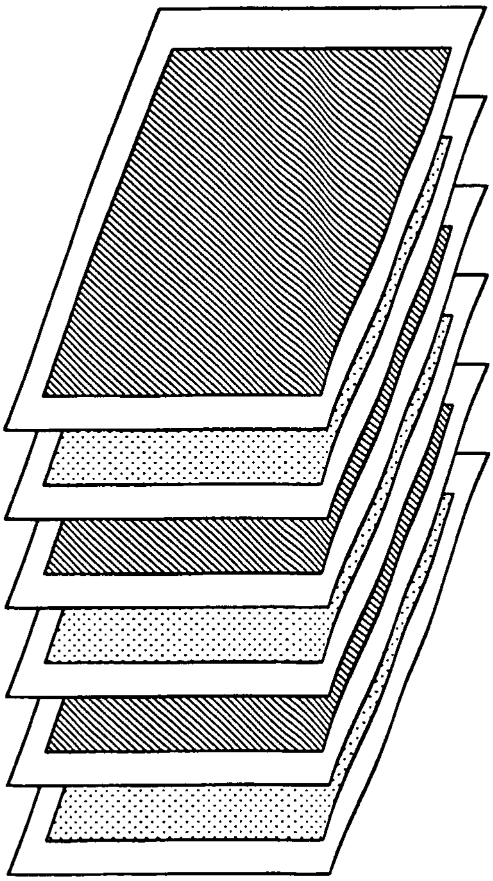

FIG.2

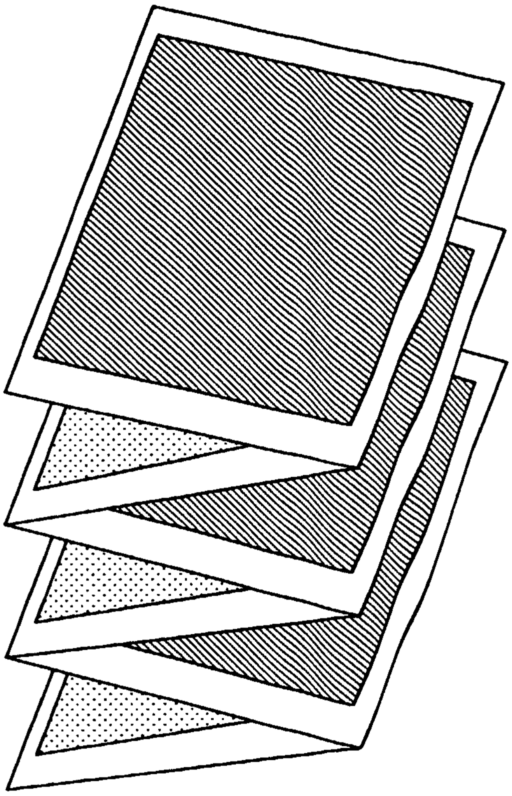

FIG.3

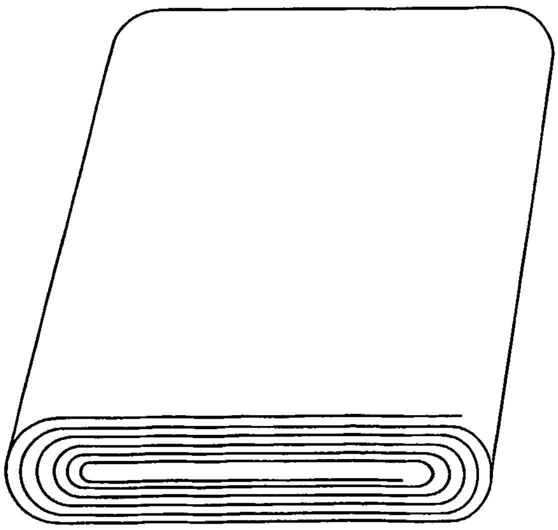

# FIG.4

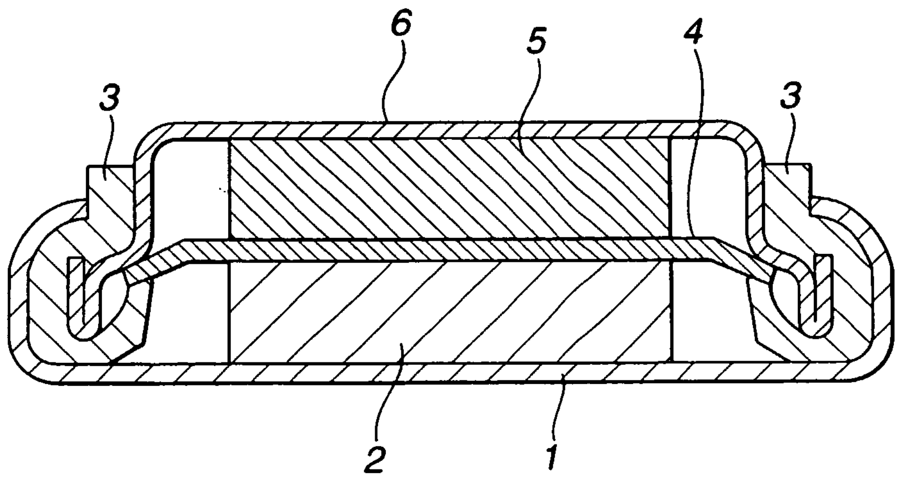
6
5
4
3
3
2
1

# FIG.5

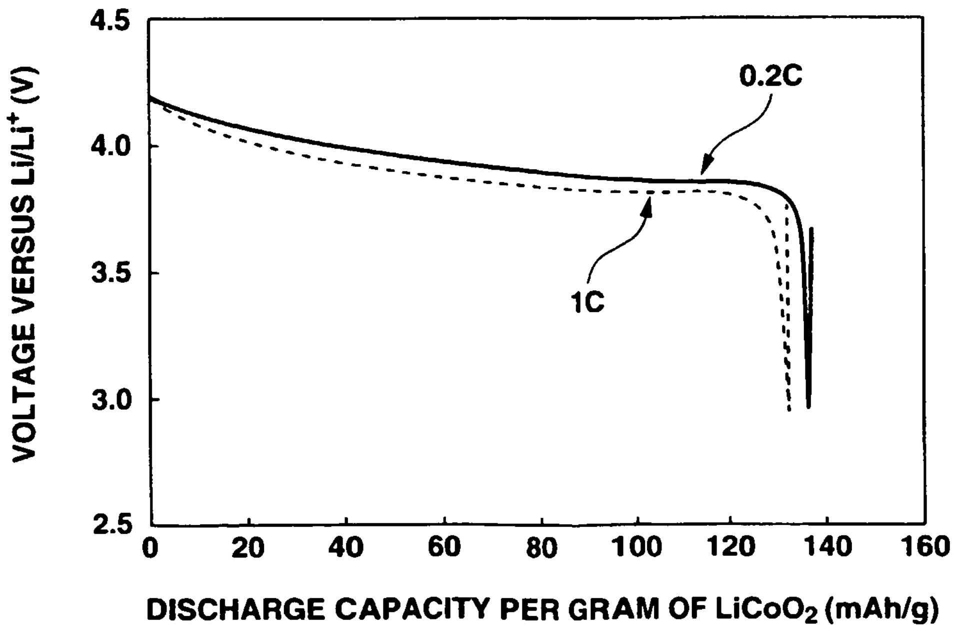
4.5
4.0
3.5
3.0
2.5
0.2C
1C
VOLTAGE VERSUS Li/Li+ (V)
0
20
40
60
80
100
120
140
160
DISCHARGE CAPACITY PER GRAM OF LiCoO2 (mAh/g)

# FIG.6

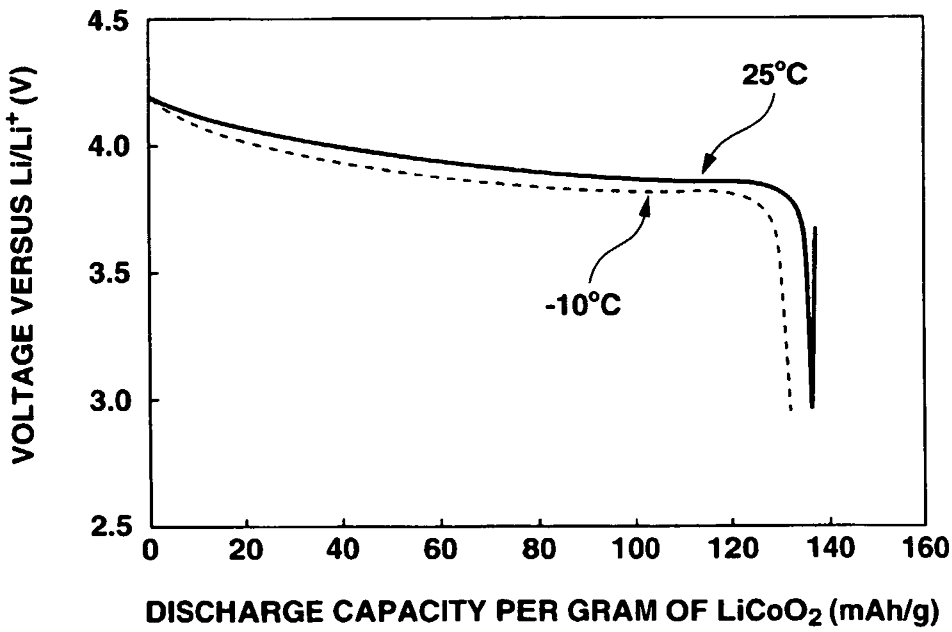
4.5
4.0
3.5
3.0
2.5
VOLTAGE VERSUS Li/Li+ (V)
25°C
-10°C
0
20
40
60
80
100
120
140
160
DISCHARGE CAPACITY PER GRAM OF LiCoO2 (mAh/g)